(19) Europäisches Patentamt / European Patent Office / Office européen des brevets

(11) **EP 4 311 240 A2**

(12) **DEMANDE DE BREVET EUROPEEN**

(43) Date de publication:
**24.01.2024 Bulletin 2024/04**

(51) Classification Internationale des Brevets (IPC):
***H04N 19/96*** *(2014.01)*

(21) Numéro de dépôt: **23214427.9**

(52) Classification Coopérative des Brevets (CPC):
**H04N 19/96**

(22) Date de dépôt: **24.11.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.11.2014 FR 1461607**

(62) Numéro(s) de document de la (des) demande(s) initiale(s) en application de l'article 76 CBE:
**15822963.3 / 3 225 031**

(71) Demandeur: **Orange**
**92130 Issy-les-Moulineaux (FR)**

(72) Inventeur: **HENRY, Félix**
**92326 Chatillon (FR)**

Remarques:
Cette demande a été déposée le 05-12-2023 comme demande divisionnaire de la demande mentionnée sous le code INID 62.

(54) **PROCÉDÉ DE PARTITIONNEMENT ET PROCÉDÉ DE SIGNALISATION DE PARTITIONNEMENT D'UNE UNITÉ D'ARBORESCENCE DE CODAGE**

(57) Procédé de décodage d'un signal de données (F) représentatif d'au moins une image codée ayant été subdivisée en une pluralité de blocs ($CTU_1$, $CTU_2$, ..., $CTU_i$, ..., $CTU_S$), comprenant les étapes suivantes, pour un bloc courant à décoder, subdivisé en une première partie ($CU_1$) et une deuxième partie ($CU_2$), la première partie étant non subdivisible et ayant une forme rectangulaire ou carrée et la deuxième partie formant le complément de la première partie dans le bloc courant, ladite deuxième partie ayant une forme géométrique à m côtés, avec M>4 :

- sélectionner, dans le signal de données, des données codées de la première partie,
- décoder les données codées de la première partie,
- reconstruire la première partie à partir des données décodées de la première partie,
- reconstruire la deuxième partie en mettant à zéro des coefficients quantifiés issus d'une quantification d'un résidu de prédiction associé à ladite deuxième partie, lesdits coefficients quantifiés n'étant pas inscrits dans ledit signal de données.

FIG.8

EP 4 311 240 A2

**Description**

Domaine de l'invention

La présente invention se rapporte de manière générale au domaine du traitement d'images, et plus précisément au décodage d'images numériques et de séquences d'images numériques.

L'invention peut s'appliquer notamment, mais non exclusivement, au codage vidéo mis en oeuvre dans les codeurs vidéo actuels AVC et HEVC et leurs extensions (MVC, 3D-AVC, MV-HEVC, 3D-HEVC, etc), ainsi qu'au décodage correspondant.

Arrière-plan de l'invention

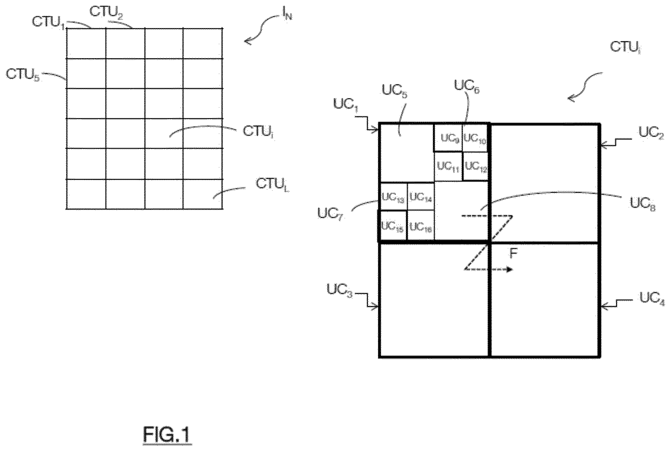

Les codeurs vidéo actuels (MPEG, H.264, HEVC, ...) utilisent une représentation par blocs des images à coder. Les images sont subdivisées en blocs de forme carrée ou rectangulaire, lesquels sont susceptibles d'être subdivisés à leur tour de façon récursive. Dans la norme HEVC, une telle subdivision récursive respecte une structure arborescente appelée « quadtree ». A cet effet, comme représenté sur la **figure 1,** une image courante $I_N$ est subdivisée une première fois en une pluralité de blocs carrés ou rectangulaires appelés CTU (de l'anglais « Coding Tree Unit »), désignés par $CTU_1$, $CTU_2$, ..., CTUi, ..., $CTU_L$. De tels blocs sont par exemple de taille 64x64 pixels ($1 \le i \le L$).

Pour un bloc CTUi donné, il est considéré que ce bloc constitue la racine d'un arbre de codage dans lequel :

- un premier niveau de feuilles sous la racine correspond à un premier niveau de profondeur de subdivision du bloc CTUi pour lequel le bloc CTUi a été subdivisé une première fois en une pluralité de blocs de codage carrés ou rectangulaires appelés CU (de l'anglais « Coding Unit »),
- un deuxième niveau de feuilles sous le premier niveau de feuilles correspond à un deuxième niveau de profondeur de partitionnement de bloc CTUi pour lequel certains blocs de ladite pluralité de blocs de codage du bloc partitionné une première fois sont partitionnés en une pluralité de blocs de codage de type CU, ...
- ... un kième niveau de feuilles sous le k-1 ième niveau de feuilles qui correspond à un kième niveau de profondeur de partitionnement du bloc CTUi pour lequel certains blocs de ladite pluralité de blocs de codage du bloc partitionné k-1 fois sont partitionnés une dernière fois en une pluralité de blocs de codage de type CU.

Dans un codeur compatible HEVC, l'itération du partitionnement du bloc CTUi est effectuée jusqu'à un niveau de profondeur de partitionnement prédéterminé.

A l'issue des partitionnements successifs précités du bloc $CTU_i$, comme représenté à la **figure 1,** ce dernier est partitionné au final en une pluralité de blocs de codage notés $UC_1$, $UC_2$, ..., $UC_j$, ..., $UC_M$ avec $1 \le j \le M$.

Le but d'une telle subdivision est de délimiter des zones qui s'adaptent bien aux caractéristiques locales de l'image, telles que par exemple une texture homogène, un mouvement constant, un objet en avant plan dans l'image, etc...

Pour un bloc CTUi considéré, plusieurs subdivisions différentes de ce dernier sont mises en compétition au codeur, c'est-à-dire respectivement différentes combinaisons d'itérations de subdivision, dans le but de sélectionner la meilleure subdivision, c'est-à-dire celle qui optimise le codage du bloc CTUi considéré selon un critère de performance de codage prédéterminé, par exemple le coût débit/distorsion ou bien un compromis efficacité/complexité, qui sont des critères bien connus de l'homme du métier.

Une fois réalisée la subdivision optimale d'un bloc CTUi considéré, une séquence d'informations numériques, telle que par exemple une suite de bits, représentative de cette subdivision optimale, est transmise dans un signal de données destiné à être stocké au codeur ou bien transmis à un décodeur vidéo pour être lu, puis décodé par ce dernier.

Dans l'exemple de la **figure 1,** la séquence binaire représentative de la subdivision optimale du bloc CTUi contient les dix-sept bits suivants : 1,1, 0, 0, 0, 0, 1, 1, 0, 0, 0, 0, 0, 0, 0, 0, 0, pour laquelle :

- le premier bit « 1 » indique une subdivision du bloc CTUi en quatre sous-blocs plus petits $UC_1$, $UC_2$, $UC_3$, $UC_4$,
- le deuxième bit « 1 » indique une subdivision du sous-bloc $UC_1$ en quatre sous-blocs plus petits $UC_5$, $UC_6$, $UC_7$, $UC_8$,
- le troisième bit « 0 » indique une absence de subdivision du sous-bloc $UC_2$,
- le quatrième bit « 0 » indique une absence de subdivision du sous-bloc $UC_3$,
- le cinquième bit « 0 » indique une absence de subdivision du sous-bloc $UC_4$,
- le sixième bit « 0 » indique une absence de subdivision du sous-bloc $UC_5$,
- le septième bit « 1 » indique une subdivision du sous-bloc $UC_6$ en quatre sous-blocs plus petits $UC_9$, $UC_{10}$, $UC_{11}$, $UC_{12}$,
- le huitième bit « 1 » indique une subdivision du sous-bloc $UC_7$ en quatre sous-blocs plus petits $UC_{13}$, $UC_{14}$, $UC_{15}$, $UC_{16}$,
- le neuvième bit « 0 » indique une absence de subdivision du sous-bloc $UC_8$,

- le dixième bit « 0 » indique une absence de subdivision du sous-bloc $UC_9$,
- le onzième bit « 0 » indique une absence de subdivision du sous-bloc $UC_{10}$,
- le douzième bit « 0 » indique une absence de subdivision du sous-bloc $UC_{11}$,
- le treizième bit « 0 » indique une absence de subdivision du sous-bloc $UC_{12}$,
- le quatorzième bit « 0 » indique une absence de subdivision du sous-bloc $UC_{13}$,
- le quinzième bit « 0 » indique une absence de subdivision du sous-bloc $UC_{14}$,
- le seizième bit « 0 » indique une absence de subdivision du sous-bloc $UC_{15}$,
- le dix-septième bit « 0 » indique une absence de subdivision du sous-bloc $UC_{16}$.

La séquence binaire obtenue nécessite qu'un ordre de parcours des sous-blocs soit prédéterminé afin de savoir à quel sous-bloc correspond un élément de syntaxe indicateur de la subdivision effectuée. Comme représenté par la flèche F sur la **figure 1,** un tel ordre de parcours est généralement lexicographique, c'est-à-dire que pour chaque niveau de subdivision considéré :

- les sous-blocs sont parcourus en commençant par le premier sous-bloc $UC_1$ situé en haut à gauche du bloc CTUi et ainsi de suite jusqu'à parvenir au sous-bloc $UC_4$ situé en bas à droite du bloc $CTU_i$,
- les sous-blocs résultant de la subdivision du sous-bloc $UC_6$ sont parcourus en commençant par le premier sous-bloc $UC_9$ situé en haut à gauche du sous-bloc $UC_6$ et ainsi de suite jusqu'à parvenir au sous-bloc $UC_{12}$ situé en bas à droite du sous-bloc $UC_6$,
- les sous-blocs résultant de la subdivision du sous-bloc $UC_7$ sont parcourus en commençant par le premier sous-bloc $UC_{13}$ situé en haut à gauche du sous-bloc $UC_7$ et ainsi de suite jusqu'à parvenir au sous-bloc $UC_{16}$ situé en bas à droite du sous-bloc $UC_7$.

Les dix-sept bits précités sont inscrits les uns à la suite des autres dans la séquence binaire qui est ensuite compressée par un codage entropique adapté.

Pour au moins un sous-bloc considéré parmi les différents sous-blocs obtenus, une prédiction de pixels du sous-bloc considéré est mise en oeuvre par rapport à des pixels de prédiction qui appartiennent soit à la même image (prédiction intra), soit à une ou plusieurs images précédentes d'une séquence d'images (prédiction inter) qui ont déjà été décodées. De telles images précédentes sont appelées classiquement images de référence et sont conservées en mémoire aussi bien au codeur qu'au décodeur. Au cours d'une telle prédiction, un sous-bloc résiduel est calculé par soustraction des pixels du sous-bloc considéré, des pixels de prédiction. Les coefficients du sous-bloc résiduel calculé sont alors quantifiés après une éventuelle transformation mathématique, par exemple de type transformée en cosinus discrète (DCT), puis codés par un codeur entropique.

Le choix entre mode de prédiction inter ou intra se fait au niveau de chacun des sous-blocs $UC_1$, $UC_2$, ..., $UC_j$, ..., $UC_M$ qui peuvent eux-même être partitionnés en sous-blocs de prédiction (« Prédiction Units » en anglais) et en sous-blocs de transformée (« Transform Units » en anglais). Chacun des sous-blocs de prédiction et des sous-blocs de transformée sont à leur tour susceptibles d'être subdivisés récursivement en sous-blocs selon la structure arborescente « quadtree » précitée.

Le bloc CTUi ainsi que ses sous-blocs $UC_1$, $UC_2$, ..., $UC_j$, ..., $UC_M$, ses sous-blocs de prédiction et ses sousblocs de transformée, sont susceptibles d'être associés à des informations décrivant leur contenu.

De telles informations sont notamment les suivantes :

- le mode de prédiction (prédiction intra, prédiction inter, prédiction par défaut réalisant une prédiction pour laquelle aucune information n'est transmise au décodeur (« en anglais « skip »)) ;
- le type de prédiction (orientation, composante d'image de référence, ...) ;
- le type de subdivision en sous-blocs ;
- le type de transformée, par exemple DCT 4x4, DCT 8x8, etc... ;
- les valeurs de pixels, les valeurs de coefficients transformés, amplitudes, signes de coefficients quantifiés des pixels contenus dans le bloc ou le sous-bloc considéré.

Ces informations sont également inscrites dans le signal de données précité.

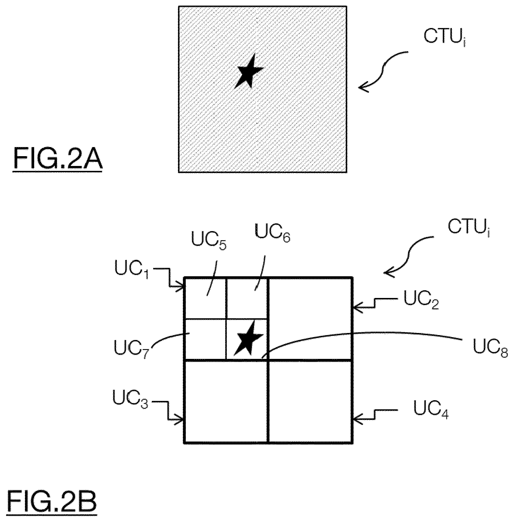

Lors du codage d'une image fixe ou d'une image d'une séquence d'images utilisant une subdivision en sousblocs de type quadtree, il est courant de retrouver dans l'image un objet significatif de taille moyenne ou petite qui est situé dans une zone de l'image relativement homogène. Une telle configuration est par exemple représentée sur la **figure 2A** qui représente, comme élément significatif, une étoile, laquelle est contenue dans une zone homogène telle que par exemple un ciel de couleur uniforme.

Après mise en oeuvre d'une subdivision en blocs et en sous-blocs de type quadtree comme représenté sur la **figure 2B,** il est possible d'isoler l'élément significatif « étoile » dans un sous-bloc $UC_8$ adapté à sa taille.

Un inconvénient d'une telle subdivision est qu'elle nécessite la transmission d'une séquence binaire représentative de cette subdivision qui contient un nombre de bits non négligeable. Une telle séquence s'avère coûteuse à signaler, ce qui ne permet pas d'optimiser la réduction du gain en compression des données codées. Il en résulte des performances de compression qui ne sont pas satisfaisantes.

Objet et résumé de l'invention

Un des buts de l'invention est de remédier à des inconvénients de l'état de la technique précité.

A cet effet, l'invention concerne un procédé de décodage d'un signal de données représentatif d'au moins une image codée ayant été subdivisée en une pluralité de blocs.

Un tel procédé de décodage est remarquable en ce qu'il comprend les étapes suivantes, pour un bloc courant à décoder, subdivisé en une première partie et une deuxième partie, la première partie étant non subdivisible et ayant une forme rectangulaire ou carrée et la deuxième partie formant le complément de la première partie dans le bloc courant, ladite deuxième partie ayant une forme géométrique à m côtés, avec m>4 :

- sélectionner, dans le signal de données, des données codées de la première partie,
- décoder les données codées de la première partie,
- reconstruire la première partie à partir des données décodées de la première partie,
- reconstruire la deuxième partie en mettant à zéro des coefficients quantifiés issus d'une quantification d'un résidu de prédiction associé à ladite deuxième partie, lesdits coefficients quantifiés n'étant pas inscrits dans ledit signal de données.

Une telle disposition permet de subdiviser très simplement un bloc courant à décoder en seulement deux parties, une telle subdivision étant beaucoup moins complexe à effectuer qu'une subdivision de type « quadtree ».

Par ailleurs, la subdivision selon l'invention est particulièrement bien adaptée au cas où des blocs de l'image à décoder contiennent un élément significatif, par exemple un objet en avant-plan, qui est situé dans une zone homogène présentant une énergie faible, telle que par exemple un arrière-plan de couleur, orientation ou mouvement uniforme.

Dans un mode de réalisation particulier, le procédé de décodage comprend en outre un décodage, en association avec les données décodées de la première partie, d'une valeur d'un élément de syntaxe lu dans le signal de données, ladite valeur correspondant à une prédiction Intra ou Inter à appliquer à la première partie.

Dans un mode de réalisation particulier, au cours de la reconstruction de la deuxième partie à m côtés du bloc courant, au moins une information de reconstruction des pixels de la deuxième partie à m côtés du bloc courant est mise à une valeur prédéterminée.

Un avantage d'une telle disposition réside dans le fait que le décodeur détermine de façon autonome ladite au moins une information de reconstruction des pixels de la deuxième partie à m côtés. Autrement dit, ladite au moins une information de reconstruction correspondante n'est avantageusement pas transmise dans le signal de données reçu au décodeur. Ainsi la réduction du coût de signalisation est optimisée.

Selon une variante, ladite au moins une information de reconstruction des pixels de la deuxième partie à m côtés du bloc courant est représentative de l'absence de subdivision de la deuxième partie à m côtés du bloc courant.

De façon avantageuse, au moment de décoder la deuxième partie à m côtés du bloc courant, le décodeur détermine de façon autonome qu'il n'a pas besoin de subdiviser cette partie, puisqu'elle caractérise une région homogène du bloc courant à décoder qui est dépourvue de détails.

Selon une autre variante, ladite au moins une information de reconstruction des pixels de la deuxième partie à m côtés du bloc courant est représentative de l'absence d'informations résiduelles résultant d'une prédiction des pixels de la deuxième partie à m côtés du bloc courant.

De façon avantageuse, au moment de décoder la deuxième partie à m côtés du bloc courant, le décodeur détermine de façon autonome que les pixels résiduels obtenus suite à la prédiction de ladite deuxième partie à m côtés ont une valeur nulle. Il est considéré que la deuxième partie à m côtés est associée à un résidu de prédiction nul puisqu'elle caractérise une région homogène du bloc courant à décoder.

Selon encore une autre variante, ladite au moins une information de reconstruction des pixels de la deuxième partie à m côtés du bloc courant est représentative de valeurs de prédiction prédéterminées des pixels de la deuxième partie à m côtés du bloc courant.

Une telle variante permet d'optimiser encore davantage le coût de signalisation en évitant de transmettre dans le signal de données l'indice du mode de prédiction qui a été sélectionné au codage pour prédire la deuxième partie à m côtés du bloc courant.

Dans encore un autre mode de réalisation particulier, un bloc courant subdivisé contient au plus une partie ayant une forme géométrique à m côtés.

Une telle disposition est bien adaptée au cas où le bloc courant contient deux zones de texture bien distinctes, c'est-à-dire celle définie par un seul élément significatif et celle définie par une seule zone homogène. De façon avantageuse, il n'est donc pas nécessaire de procéder à une nouvelle subdivision du bloc courant à décoder.

Dans encore un autre mode de réalisation particulier, la première partie est située dans un des coins du bloc courant et m=6.

Les différents modes ou caractéristiques de réalisation précités peuvent être ajoutés indépendamment ou en combinaison les uns avec les autres, aux étapes du procédé de décodage tel que défini ci-dessus.

Corrélativement, l'invention concerne un dispositif de décodage d'un signal de données représentatif d'au moins une image codée ayant été subdivisée en une pluralité de blocs.

Un tel dispositif de décodage est remarquable en ce qu'il comprend, pour un bloc courant à décoder, subdivisé en une première partie et une deuxième partie, la première partie étant non subdivisible et ayant une forme rectangulaire ou carrée et la deuxième partie formant le complément de la première partie dans le bloc courant, ladite deuxième partie ayant une forme géométrique à m côtés, avec m>4 :

- des moyens de sélection, dans le signal de données, de données codées de la première partie,
- des moyens de décodage des données codées de la première partie,
- des moyens de reconstruction de la première partie à partir des données décodées de la première partie,
- des moyens de reconstruction de la deuxième partie en mettant à zéro des coefficients quantifiés issus d'une quantification d'un résidu de prédiction associé à ladite deuxième partie, lesdits coefficients quantifiés n'étant pas inscrits dans ledit signal de données.

L'invention concerne encore un programme d'ordinateur comportant des instructions pour mettre en oeuvre le procédé de décodage selon l'invention, lorsqu'il est exécuté sur un ordinateur.

Un tel programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Encore un autre objet de l'invention vise aussi un support d'enregistrement lisible par un ordinateur, et comportant des instructions de programme d'ordinateur tel que mentionné ci-dessus.

Le support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, un tel support d'enregistrement peut être un circuit intégré dans lequel le programme est incorporé, le circuit étant adapté pour exécuter le procédé en question ou pour être utilisé dans l'exécution de ce dernier.

Brève description des dessins

D'autres caractéristiques et avantages apparaîtront à la lecture de plusieurs modes de réalisation préférés décrits en référence aux figures dans lesquelles les aspects relatifs au codage ne relèvent pas de l'invention et ne sont présents qu'à titre illustratif, et dans lesquelles :

- la figure 1 représente un exemple de subdivision classique d'un bloc courant, telle que la subdivision de type « quadtree »,
- les figures 2A et 2B représentent une application de la subdivision de type « quadtree » à un bloc courant qui contient un seul élément significatif, une étoile, laquelle est contenue dans une zone homogène telle que par exemple un ciel de couleur uniforme,
- la figure 3 représente les principales étapes d'un procédé de codage,
- la figure 4 représente un exemple d'un dispositif de codage,
- les figures 5A à 5J représentent respectivement différents modes de réalisation de subdivision selon l'invention du bloc courant,
- les figures 6A et 6B représentent respectivement deux exemples de codage des parties obtenues par subdivision du bloc courant, conformément à un type de subdivision représenté à la figure 5A,
- la figure 7 représente un exemple de subdivision du bloc courant auquel s'applique le codage de la figure 6B,
- la figure 8 représente les principales étapes du procédé de décodage selon un mode de réalisation de l'invention,
- la figure 9 représente un mode de réalisation d'un dispositif de décodage selon l'invention,
- les figures 10A et 10B représentent respectivement deux modes de réalisation de décodage des parties obtenues après reconstruction de la subdivision du bloc courant, conformément à un type de subdivision représenté à la figure 5A.

Description détaillée de la partie codage

Un mode de réalisation va maintenant être décrit, dans lequel un procédé de codage est utilisé pour coder une image ou une séquence d'images selon un signal binaire proche de celui qu'on obtient par un codage mis en oeuvre dans un codeur conforme à l'une quelconque des normes de codage vidéo actuelles ou à venir.

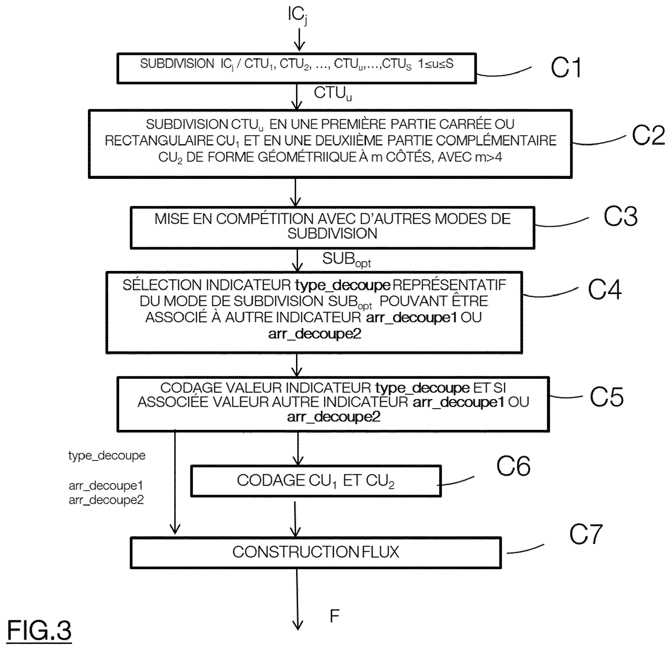

Dans ce mode de réalisation, le procédé de codage est par exemple implémenté de manière logicielle ou matérielle par modifications d'un tel codeur. Le procédé de codage est représenté sous la forme d'un algorithme comportant des étapes C1 à C7 telles que représentées à la **figure 3.**

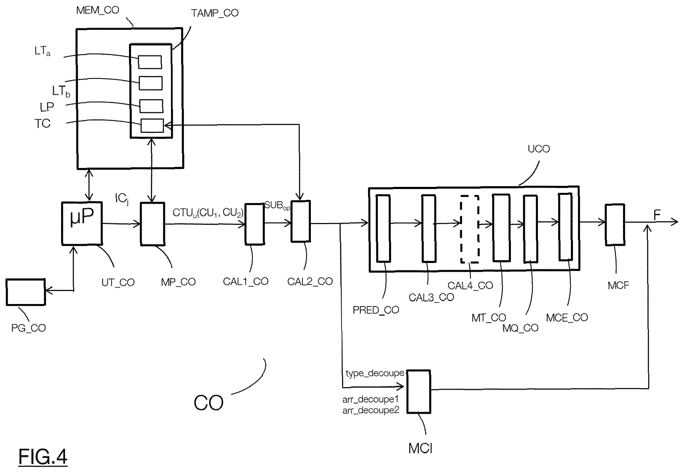

Selon ce mode de réalisation, le procédé de codage est implémenté dans un dispositif de codage ou codeur CO représenté à la **figure 4.**

Comme illustré en **figure 4,** un tel codeur comprend une mémoire MEM_CO comprenant une mémoire tampon TAMP_CO, une unité de traitement UT_CO équipée par exemple d'un microprocesseur $\mu$P et pilotée par un programme d'ordinateur PG_CO qui met en oeuvre le procédé de codage. A l'initialisation, les instructions de code du programme d'ordinateur PG_CO sont par exemple chargées dans une mémoire RAM (non représentée) avant d'être exécutées par le processeur de l'unité de traitement UT_CO.

Le procédé de codage représenté sur la **figure 3** s'applique à toute image courante $IC_j$ fixe ou bien faisant partie d'une séquence de L images $IC_1$, ..., $IC_j$, ..., $IC_L$ ($1 \le j \le L$) à coder.

Au cours d'une étape C1 représentée à la **figure 3,** il est procédé, de façon connue en soi, à la subdivision d'une image courante $IC_j$ en une pluralité de blocs de type CTU précité : $CTU_1$, $CTU_2$, ..., $CTU_u$, ..., CTUs ($1 \le u \le S$).

Une telle étape de subdivision est mise en oeuvre par un processeur ou module logiciel de partitionnement MP_CO représenté sur la **figure 4,** lequel module est piloté par le microprocesseur $\mu$P de l'unité de traitement UT_CO.

De façon préférentielle, chacun des blocs $CTU_1$, $CTU_2$, ..., $CTU_u$, ..., CTUs présente une forme carrée et comprend NxN pixels, avec $N \ge 2$.

Selon une alternative, chacun des blocs $CTU_1$, $CTU_2$, ..., $CTU_u$, ..., CTUs présente une forme rectangulaire et comprend NxP pixels, avec $N \ge 1$ et $P \ge 2$.

Au cours d'une étape C2 représentée à la **figure 3,** pour un bloc courant $CTU_u$ préalablement sélectionné, le module de partitionnement MP_CO de la **figure 4** subdivise le bloc courant $CTU_u$ en au moins une première partie et une deuxième partie, les première et deuxième parties étant complémentaires l'une de l'autre. Selon l'invention :

- la première partie a une forme rectangulaire ou carrée,
- et la deuxième partie a une forme géométrique à m côtés, avec m>4.

Selon un mode préféré de réalisation, le bloc courant $CTU_u$ est subdivisé :

- en une première partie de forme rectangulaire ou carrée ou bien en une pluralité de parties de forme rectangulaire ou carrée,
- et en au plus une deuxième partie de forme géométrique à m côtés.

Au sens de l'invention, les première et deuxième parties forment respectivement deux unités de codage (de l'anglais « coding unit ») distinctes $CU_1$ et $CU_2$. Cette dernière terminologie est notamment utilisée dans la norme HEVC « ISO/IEC/23008-2 Recommandation ITU-T H.265 High Efficiency Video Coding (HEVC) ».

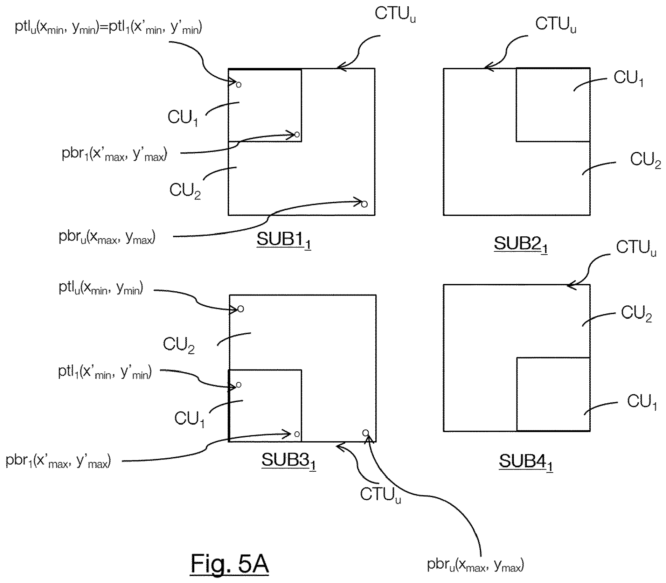

Selon un premier mode de réalisation de subdivision représenté sur la **figure 5A,** pour un bloc courant $CTU_u$ carré de taille NxN :

- la première partie $CU_1$ est un bloc carré de taille $\frac{N}{2} \times \frac{N}{2}$,

- et la deuxième partie $CU_2$, qui forme le complément de la première partie $CU_1$ dans le bloc courant $CTU_u$, a une forme géométrique à m côtés, avec m>4.

Dans l'exemple représenté sur la **figure 5A,** m=6.

Comme représenté sur la **figure 5A,** quatre types de subdivision $SUB1_1$, $SUB2_1$, $SUB3_1$, $SUB4_1$ du bloc courant $CTU_u$ sont possibles, le bloc carré $CU_1$ pouvant être situé dans l'un des quatre coins du bloc courant $CTU_u$.

Dans un souci de clarté de la **figure 5A,** uniquement dans le cas par exemple des types de subdivision $SUB1_1$ et $SUB3_1$, sont représentés :

- le premier pixel $ptl_u$ du bloc courant $CTU_u$, de coordonnées ($x_{min}$, $y_{min}$), qui est situé en haut et à gauche dans ce dernier,
- le dernier pixel $pbr_u$ du bloc courant $CTU_u$, de coordonnées ($x_{max}$, $y_{max}$), qui est situé en bas et à droite dans ce dernier,
- le premier pixel $ptl_1$ de la première partie $CU_1$, de coordonnées ($x'_{min}$, $y'_{min}$), qui est situé en haut et à gauche dans cette dernière,
- le dernier pixel pbri de la première partie $CU_1$, de coordonnées ($x'_{max}$, $y'_{max}$) qui est situé en bas et à droite dans cette dernière.

Selon le type particulier de subdivision $SUB1_1$, le premier pixel $ptl_u$ du bloc courant $CTU_u$ est le même que le premier pixel $ptl_1$ de la première partie $CU_1$.

Quel que soit le type de subdivision choisi, la deuxième partie $CU_2$ de forme géométrique à m côtés est alors définie de façon générale comme un ensemble de pixels $ptl_2$ tel que pour tout pixel $pv_2(x''_v, y''_v)$ de cet ensemble :

-

$$x_{min} \leq x''_v \leq x_{max} \text{ et } y_{min} \leq y''_v \leq y_{max}$$

-

$$x''_v < x'_{min} \text{ ou } x''_v > x'_{max} \text{ ou } y''_v < y'_{min} \text{ ou } y''_v > y'_{max}$$

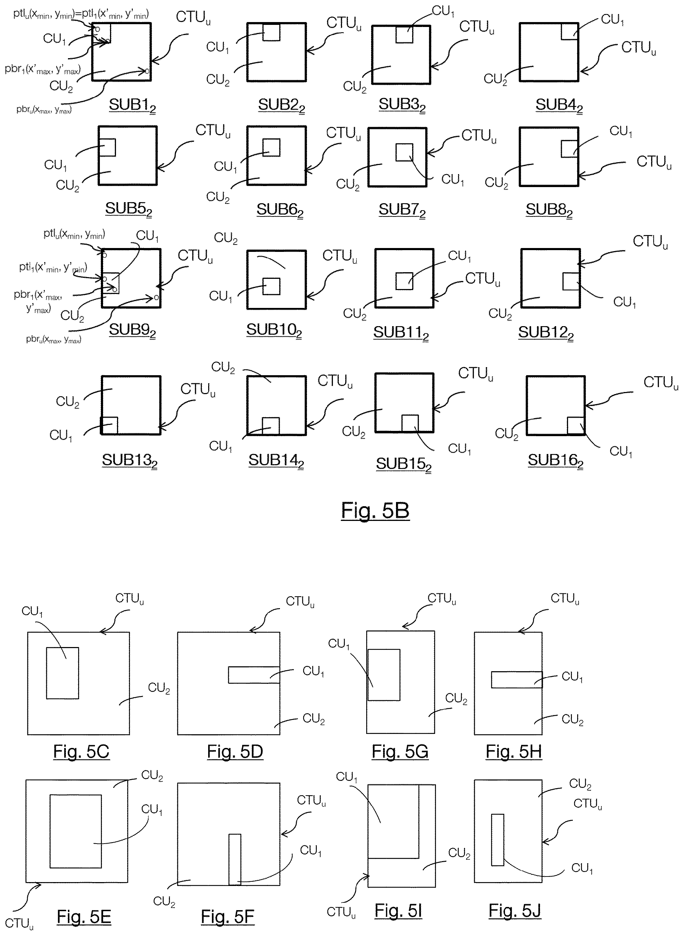

Selon un deuxième mode de réalisation de subdivision représenté sur la **figure 5B**, pour un bloc courant $CTU_u$ carré de taille NxN :

- la première partie $CU_1$ est un bloc carré de taille $\dfrac{N}{4} \times \dfrac{N}{4}$ ,
- et la deuxième partie $CU_2$, qui forme le complément de la première partie $CU_1$ dans le bloc courant $CTU_u$, a une forme géométrique à m côtés, avec m>4.

Dans l'exemple représenté sur la **figure 5B,** m=6 ou m=8.

Comme représenté sur la **figure 5B,** seize types de subdivision $SUB1_2$, $SUB2_2$, ..., $SUB16_2$ du bloc courant $CTU_u$ sont possibles, le bloc carré $CU_1$ pouvant être situé dans seize positions différentes à l'intérieur du bloc courant $CTU_u$, par translation successive de N/4 pixels du bloc carré $CU_1$ à l'intérieur du bloc courant $CTU_u$.

Dans un souci de clarté de la **figure 5B,** uniquement dans le cas par exemple des types de subdivision $SUB1_2$ et $SUB9_2$, sont représentés :

- le premier pixel $ptl_u$ du bloc courant $CTU_u$, de coordonnées ($x_{min}$, $y_{min}$), qui est situé en haut et à gauche dans ce dernier,
- le dernier pixel $pbr_u$ du bloc courant $CTU_u$, de coordonnées ($x_{max}$, $y_{max}$), qui est situé en bas et à droite dans ce dernier,
- le premier pixel $ptl_1$ de la première partie $CU_1$, de coordonnées ($x'_{min}$, $y'_{min}$), qui est situé en haut et à gauche dans cette dernière,
- le dernier pixel pbri de la première partie $CU_1$, de coordonnées ($x'_{max}$, $y'_{max}$) qui est situé en bas et à droite dans cette dernière.

Selon le mode particulier de subdivision $SUB1_2$, le premier pixel $ptl_u$ du bloc courant $CTU_u$ est le même que le premier pixel $ptl_1$ de la première partie $CU_1$.

Quel que soit le type de subdivision choisi, la deuxième partie $CU_2$ de forme géométrique à m côtés est alors définie de façon générale comme un ensemble de pixels tel que pour tout pixel $pv_2(x''_v, y''_v)$ de cet ensemble :

-

$$x_{min} \leq x''_v \leq x_{max} \text{ et } y_{min} \leq y''_v \leq y_{max}$$

-

$$x''_v < x'_{min} \text{ ou } x''_v > x'_{max} \text{ ou } y''_v < y'_{min} \text{ ou } y''_v > y'_{max}$$

Selon des troisième, quatrième, cinquième et sixième modes de réalisation de subdivision représentés respectivement sur les **figures 5C, 5D, 5E** et **5F,** pour un bloc courant $CTU_u$ carré de taille NxN :

- la première partie $CU_1$ est un bloc rectangulaire de taille UxV pixels, tel que U<N et V<N, l'ensemble des coordonnées d'un tel bloc rectangulaire étant choisi dans une liste $LT_a$ prédéfinie de plusieurs ensembles de coordonnées définissant chacun un bloc rectangulaire d'une forme prédéterminée, la liste $LT_a$ étant stockée dans la mémoire tampon TAMP_CO du codeur CO de la **figure 4,**

- et la deuxième partie $CU_2$, qui forme le complément de la première partie $CU_1$ dans le bloc courant $CTU_u$, a une forme géométrique à m côtés, avec m>4.

Sur chacune des **figures 5C** à **5F,** un seul type de subdivision du bloc courant $CTU_u$ a été représenté, sachant qu'il peut bien entendu en exister plusieurs.

En outre, la définition de la deuxième partie $CU_2$ du bloc courant $CTU_u$ est la même que celle donnée dans les exemples des **figures 5A** et **5B.**

Selon des septième, huitième, neuvième et dixième modes de réalisation de subdivision représentés respectivement sur les **figures 5H, 5I, 5J** et 5K, le bloc courant $CTU_u$ est un rectangle de taille NxP pixels, avec $N\geq1$ et $P\geq2$.

Selon ces quatre modes de subdivision :

- la première partie $CU_1$ est un bloc rectangulaire de taille UxV, tel que U<N et V<P, l'ensemble des coordonnées d'un tel bloc rectangulaire étant choisi dans une liste $LT_b$ prédéfinie de plusieurs ensembles de coordonnées définissant chacun un bloc rectangulaire d'une forme prédéterminée, la liste $LT_b$ étant stockée dans la mémoire tampon TAMP_CO du codeur CO de la **figure 4,**
- et la deuxième partie $CU_2$, qui forme le complément de la première partie $CU_1$ dans le bloc courant $CTU_u$, a une forme géométrique à m côtés, avec m>4.

Sur chacune des **figures 5G** à **5I,** un seul type de subdivision du bloc courant $CTU_u$ a été représenté, sachant qu'il peut bien entendu en exister plusieurs.

En outre, la définition de la deuxième partie $CU_2$ du bloc courant $CTU_u$ est la même que celle donnée dans les exemples des **figures 5A** et **5B.**

Au cours d'une étape C3 représentée à la **figure 3,** chacun des blocs courants $CTU_u$, ou une partie seulement, qui a été subdivisé conformément auxdifférents modes de subdivision tels que représentés sur les figures 5A à 5K est mis en compétition :

- avec différents blocs courants $CTU_u$ subdivisés selon respectivement différents modes de subdivision bien connus, tels que par exemple subdivisés en seulement quatre blocs rectangulaires ou carrés, subdivisés selon la méthode « quadtree », etc...
- et avec un bloc courant $CTU_u$ non subdivisé.

Une telle mise en compétition est effectuée selon un critère de performance de codage prédéterminé du bloc courant $CTU_u$, par exemple le coût débit/distorsion ou bien un compromis efficacité/complexité, qui sont des critères bien connus de l'homme du métier.

La mise en compétition est mise en oeuvre par un processeur ou module logiciel de calcul CAL1_CO représenté sur la **figure 4,** lequel module est piloté par le microprocesseur $\mu$P de l'unité de traitement UT_CO.

A l'issue de la mise en compétition, un mode de subdivision optimal $SUB_{opt}$ du bloc courant $CTU_u$ est sélectionné, c'est-à-dire qu'il s'agit de celui qui optimise le codage du bloc $CTU_u$ par minimisation du coût débit/distorsion ou bien par maximisation du compromis efficacité/complexité.

Au cours d'une étape C4 représentée à la **figure 3,** un indicateur représentatif du mode de subdivision sélectionné à l'issue de l'étape C3 est sélectionné dans une table de correspondance TC stockée dans la mémoire tampon TAMP_CO du codeur CO de la **figure 4.**

Une telle sélection est mise en oeuvre par un processeur ou module logiciel de calcul CAL2_CO représenté sur la **figure 4,** lequel module est piloté par le microprocesseur $\mu$P de l'unité de traitement UT_CO.

L'indicateur représentatif d'un mode de subdivision donné est par exemple un élément de syntaxe appelé **type_decoupe** qui, selon un mode de réalisation préférentiel, prend par exemple trois valeurs :

- 0 pour indiquer une subdivision classique du bloc courant en quatre blocs rectangulaires ou carrés,
- 1 pour indiquer une subdivision du bloc courant conformément au mode de subdivision représenté sur la **figure 5A,**
- 2 pour indiquer une subdivision du bloc courant conformément au mode de subdivision représenté sur la **figure 5B,**
- 3 pour indiquer une absence de subdivision du bloc courant.

Par ailleurs, dans le cas où l'élément de syntaxe **type_decoupe** vaut 1, ce dernier est associé, dans la table de correspondance TC de la **figure 4,** à un autre élément de syntaxe appelé **arr_decoupe1** qui indique le type de subdivision $SUB1_1$, $SUB2_1$, $SUB3_1$, $SUB4_1$ choisi, tel que représenté à la figure **5A.** L'élément de syntaxe **arr_decoupe1** prend la valeur :

- 0 pour indiquer le type de subdivision $SUB1_1$,
- 1 pour indiquer le type de subdivision $SUB2_1$,
- 2 pour indiquer le type de subdivision $SUB3_1$,
- 3 pour indiquer le type de subdivision $SUB4_1$.

Par ailleurs, dans le cas où l'élément de syntaxe **type_decoupe** vaut 2, ce dernier est associé, dans la table de correspondance TC de la **figure 4,** à un autre élément de syntaxe appelé **arr_decoupe2** qui indique le type de subdivision choisi parmi les seize types de subdivision $SUB1_2$, $SUB2_2$, ...,

$SUB16_2$ du bloc courant $CTU_u$, tel que représentés à la **figure 5B.** L'élément de syntaxe **arr_decoupe2** prend la valeur :

- 0 pour indiquer le type de subdivision $SUB1_2$,
- 1 pour indiquer le type de subdivision $SUB2_2$,
- 2 pour indiquer le type de subdivision $SUB3_2$,
- 3 pour indiquer le type de subdivision $SUB4_2$,
- 4 pour indiquer le type de subdivision $SUB5_2$,
- 5 pour indiquer le type de subdivision $SUB6_2$,
- 6 pour indiquer le type de subdivision $SUB7_2$,
- 7 pour indiquer le type de subdivision $SUB8_2$,
- 8 pour indiquer le type de subdivision $SUB9_2$,
- 9 pour indiquer le type de subdivision $SUB10_2$,
- 10 pour indiquer le type de subdivision $SUB11_2$,
- 11 pour indiquer le type de subdivision $SUB12_2$,
- 12 pour indiquer le type de subdivision $SUB13_2$,
- 13 pour indiquer le type de subdivision $SUB14_2$,
- 14 pour indiquer le type de subdivision $SUB15_2$,
- 15 pour indiquer le type de subdivision $SUB16_2$.

Au cours d'une étape C5 représentée à la **figure 3,** il est procédé au codage de la valeur de l'élément de syntaxe **type_decoupe** qui a été sélectionné à l'issue de l'étape C4 précitée et, s'il y a lieu, au codage de l'élément de syntaxe **arr_decoupe1** ou **arr_decoupe2** qui lui est associé.

L'étape C5 précitée est mise en oeuvre par un processeur ou module logiciel de codage d'indicateur MCI tel que représenté à la **figure 4,** lequel module est piloté par le microprocesseur $\mu$P de l'unité de traitement UT_CO.

Au cours d'une étape C6 représentée à la **figure 3,** il est procédé au codage des parties $CU_1$ et $CU_2$ du bloc courant $CTU_u$ selon un ordre de parcours prédéterminé. Selon un mode de réalisation préféré, la première partie $CU_1$ est codée avant la deuxième partie $CU_2$. En alternative, la première partie $CU_1$ est codée après la deuxième partie $CU_2$.

L'étape de codage C6 est mis en oeuvre par un processeur ou module logiciel de codage UCO telle que représenté sur la **figure 4,** lequel module est piloté par le microprocesseur $\mu$P de l'unité de traitement UT_CO.

Comme représenté plus en détail sur la **figure 4,** le module de codage UCO comprend classiquement :

- un processeur ou module logiciel de prédiction PRED_CO,
- un processeur ou module logiciel de calcul de données résiduelles CAL3_CO,
- un processeur ou module logiciel MT_CO de transformation de type DCT (abréviation anglaise de « Discrète Cosine Transform »), DST (abréviation anglaise de « Discrète Sine Transform »), DWT (abréviation anglaise de « Discrète Wavelet Transform »)
- un processeur ou module logiciel de quantification MQ_CO,
- un processeur ou module logiciel MCE_CO de codage entropique par exemple de type CABAC ("Context Adaptive Binary Arithmetic Coder" en anglais) ou encore un codeur de Huffman connu en tant que tel.

Au cours d'une étape C7 représentée à la **figure 3,** il est procédé à la construction d'un signal de données F qui contient les données codées à l'issue des étapes C5 et C6 précitées. Le signal de données F est ensuite transmis par un réseau de communication (non représenté) à un terminal distant. Celui-ci comporte un décodeur qui sera décrit plus loin dans la suite de la description.

L'étape C7 est mise en oeuvre par un processeur ou module logiciel MCF de construction de signal de données, tel que représenté sur la **figure 4.**

Les étapes de codage qui viennent d'être décrites ci-dessus sont mises en oeuvre pour tous les blocs $CTU_1$, $CTU_2$, ..., $CTU_u$, ..., CTUs à coder de l'image courante $IC_j$ considérée, dans un ordre prédéterminé qui est par exemple l'ordre lexicographique.

D'autres types de parcours que celui qui vient d'être décrit ci-dessus sont bien sûr possibles.

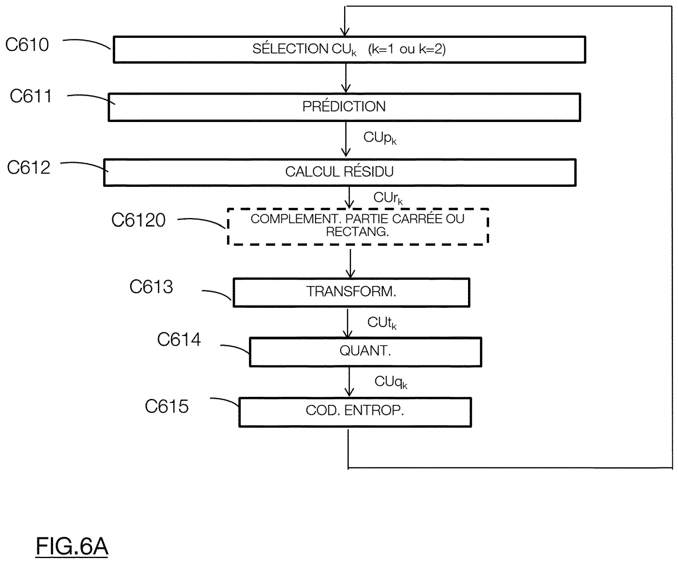

On va maintenant décrire, en référence à la **figure 6A,** un premier mode de réalisation des différentes sous-étapes mises en oeuvre lors de l'étape de codage C6 précitée, dans le module de codage UCO représenté sur la **figure 4.**

Conformément à ce premier mode de réalisation, le mode de subdivision optimal $SUB_{opt}$ qui a été sélectionné à l'issue de l'étape de codage C3 est par exemple l'un des modes de subdivision représentés sur la **figure 5A.** A cet effet, c'est l'indicateur **type_decoupe** de valeur 1 qui a été sélectionné à l'issue de l'étape C4 précitée. Plus précisément, c'est par exemple le type de subdivision $SUBD2_1$, tel que représenté sur la **figure 5A,** qui a été sélectionné à l'issue de l'étape de codage C3. A cet effet, l'indicateur **type_decoupe** de valeur 1 est en outre associé à l'indicateur **arr_decoupe1** de valeur 1, tel que défini plus haut dans la description.

La valeur 1 de l'indicateur **type_decoupe** est inscrite sous forme compressée dans le signal de données F, suivie de la valeur 1 de l'indicateur **arr_decoupe1.**

Par ailleurs, conformément au premier mode de réalisation de la **figure 6A,** les parties $CU_1$ et $CU_2$ du bloc courant $CTU_u$ ne sont pas subdivisées à nouveau.

A cet effet, selon un mode de réalisation :

- en association avec les données codées de la première partie $CU_1$, est associé l'indicateur **type_decoupe** de valeur 3,
- en association avec les données codées de la deuxième partie $CU_2$, est associé l'indicateur **type_decoupe** de valeur 3.

La valeur de l'indicateur **type_decoupe** associée aux données codées de la deuxième partie $CU_2$ est inscrite sous forme compressée dans le signal de données F avant la valeur de l'indicateur **type_decoupe** associé aux données codées de la première partie $CU_1$.

Dans l'exemple de la **figure 6A,** Le signal de données F contient donc les valeurs suivantes : 1133 qui sont représentatives du partitionnement du bloc courant $CTU_u$.

En variante, compte tenu du fait que la deuxième partie $CU_2$ définit une zone homogène du bloc courant $CTU_u$, aucun indicateur représentatif de l'absence de subdivision de la partie $CU_2$ n'est inscrit dans le signal de données F représenté aux **figures 3** et **4.** Selon une telle variante, il est en effet supposé au codage, comme au décodage, qu'une partie à m côtés du bloc courant n'est systématiquement pas subdivisée. Ainsi, la transmission au décodeur d'un indicateur type_decoupe de valeur 3 ne s'avère pas nécessaire.

Le signal de données F contient donc les valeurs suivantes : 113, ce qui réduit le coût de signalisation.

Au cours d'une sous-étape C610 représentée à la **figure 6A,** le module de codage UCO sélectionne, comme partie courante $CU_k$ (k=1 ou k=2), soit d'abord la partie carrée $CU_1$, soit d'abord la partie $CU_2$ à m côtés.

Au cours d'une sous-étape C611 représentée à la **figure 6A,** le module PRED_CO de la **figure 4** procède au codage prédictif de la partie courante $CU_1$.

De façon classique, les pixels de la partie $CU_1$ sont prédits par rapport à des pixels ayant déjà été codés puis décodés, par mise en compétition de techniques connues de prédiction intra et/ou inter.

Parmi les prédictions possibles pour la partie courante $CU_1$, la prédiction optimale est choisie selon un critère débit-distorsion bien connu de l'homme du métier.

Ladite sous-étape de codage prédictif précitée permet de construire une partie prédite $CUp_1$ qui est une approximation de la partie courante $CU_1$. Les informations relatives à ce codage prédictif seront ultérieurement inscrites dans le signal de données F représenté sur les **figures 3** et **4.** De telles informations comprennent notamment le type de prédiction (inter ou intra), et le cas échéant, le mode de prédiction intra ou bien l'indice d'image de référence et le vecteur de déplacement utilisés dans le mode de prédiction inter. Ces informations sont compressées par le codeur CO représenté à la **figure 3.**

Au cours d'une sous-étape C612, le module de calcul CAL3_CO de la **figure 4** procède à la soustraction de la partie prédite $CUp_1$ de la partie courante $CU_1$ pour produire une partie résidu $CUr_1$.

Au cours d'une sous-étape C613 représentée à la **figure 6A,** le module MT_CO de la **figure 4** procède à la transformation de la partie résidu $CUr_1$ selon une opération classique de transformation directe, telle que par exemple une transformation en cosinus discrètes de type DCT, pour produire une partie transformée CUti.

Au cours d'une sous-étape C614 représentée à la **figure 6A,** le module MQ_CO de la **figure 4** procède à la quantification de la partie transformée CUti selon une opération classique de quantification, telle que par exemple une quantification scalaire. Une partie $CUq_1$, formée de coefficients quantifiés, est alors obtenue.

Au cours d'une sous-étape C615 représentée à la **figure 6A,** le module MCE_CO de la **figure 4** procède au codage entropique des coefficients quantifiés $CUq_1$.

Les sous-étapes C611 à C615 précitées sont ensuite itérées en vue de coder la deuxième partie $CU_2$ à m côtés du bloc courant $CTU_u$.

Dans le cas du codage de la deuxième partie $CU_2$ à m côtés, une ou plusieurs informations de codage des pixels de la deuxième partie $CU_2$ sont mises à des valeurs prédéterminées.

Ainsi, selon une variante de réalisation préférée, au cours de la sous-étape C611 de codage prédictif de la partie $CU_2$ du bloc courant $CTU_u$, les pixels de la partie $CU_2$ sont prédits par rapport respectivement à des pixels de valeurs correspondantes prédéterminées. De telles valeurs sont stockées dans une liste LP contenue dans la mémoire tampon TAMP_CO du codeur CO de la **figure 4.**

De préférence, ces valeurs de prédiction prédéterminées sont sélectionnées de façon à ce qu'au cours de la sous-étape C612 de la **figure 6A,** la soustraction de la partie prédite $CUp_2$ de la partie courante $CU_2$ produise une partie résidu $CUr_2$ qui comprenne des valeurs pixelliques nulles ou proches de zéro.

Une telle disposition permet de profiter avantageusement de l'homogénéité de la partie $CU_2$ du bloc courant $CTU_u$ tout en permettant de réduire sensiblement le coût de signalisation des informations de codage du bloc courant $CTU_u$ dans le signal de données F.

En variante, les pixels de la partie $CU_2$ sont prédits classiquement, de la même façon que la partie $CU_1$.

Selon une autre variante de réalisation préférée, les coefficients quantifiés de la partie résidu quantifiée $CUq_2$ obtenue à l'issue de la sous-étape

C614 de la **figure 6A** sont tous mis à zéro et ne sont pas inscrits dans le signal de données F.

Une telle disposition permet de profiter avantageusement de l'homogénéité de la partie $CU_2$ du bloc courant $CTU_u$ tout en permettant de réduire sensiblement le coût de signalisation des informations de codage du bloc courant $CTU_u$ dans le signal de données F.

Entre les sous-étapes C612 et C613 précitées, une sous-étape intermédiaire C6120 est mise en oeuvre. Au cours de cette sous-étape intermédiaire, les pixels résiduels de la partie résidu $CUr_2$ à m côtés sont complétés par des pixels de valeur respective prédéterminée, jusqu'à l'obtention d'un bloc de pixels carré ou rectangulaire.

Selon différents modes de réalisation possibles, les pixels résiduels de la partie résidu $CUr_2$ peuvent être complétés :

- par des pixels de valeur respective nulle,
- par des pixels reconstruits classiquement par interpolation,
- par des pixels reconstruits classiquement à l'aide de la technique dite de « inpaiting ».

La sous-étape C6120 précitée est mise en oeuvre par un processeur ou module logiciel de calcul CAL4_CO tel que représenté à la **figure 4,** lequel module est piloté par le microprocesseur µP de l'unité de traitement UT_CO.

Une telle disposition permet de réutiliser le module de transformation MT_CO de la **figure 4** qui applique classiquement des transformées de blocs carrés ou rectangulaires.

Compte tenu du fait que la sous-étape C612 ne s'applique que pour la deuxième partie $CU_2$ de forme géométrique à m côtés, cette sous-étape, de même que le module de calcul CAL4_CO, sont représentés en pointillés, respectivement sur les **figures 3** et **4.**

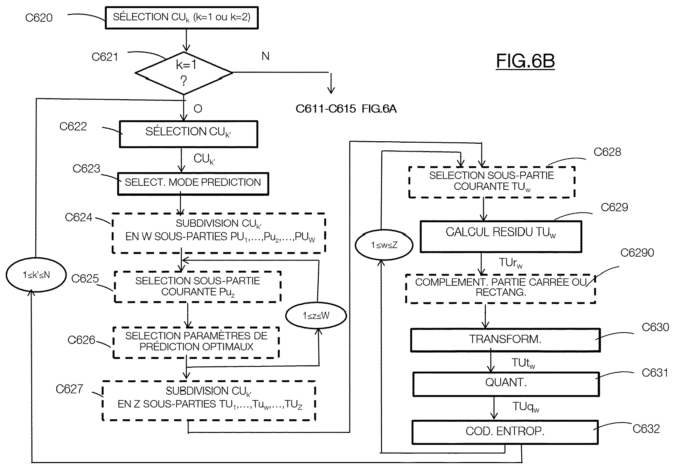

On va maintenant décrire, en référence à la **figure 6B,** un deuxième mode de réalisation des différentes sous-étapes mises en oeuvre lors de l'étape de codage C6 précitée, dans le module de codage UCO représenté sur la **figure 4.**

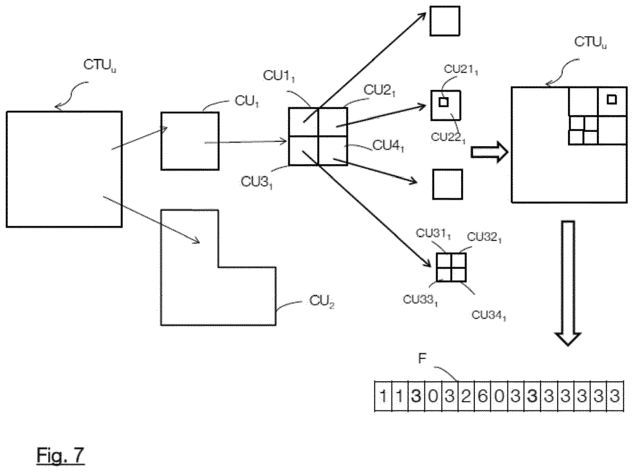

Ce deuxième mode de réalisation se distingue de celui de la **figure 6A** par le fait que la première partie $CU_1$ du bloc courant $CTU_u$ est subdivisée à nouveau. Un exemple d'une telle subdivision du bloc courant $CTU_u$ est représenté sur la **figure 7.**

Dans l'exemple de la **figure 7,** le mode de subdivision optimal $SUB_{opt}$ qui a été sélectionné à l'issue de l'étape de codage C3 précitée est par exemple à nouveau l'indicateur **type_decoupe** de valeur 1 qui a été sélectionné à l'issue de l'étape C4 précitée. Comme représenté à la **figure 7,** cette valeur est inscrite sous forme compressée dans le signal de données F. Comme expliqué plus haut, l'indicateur **type_decoupe** de valeur 1 est en outre associé à l'indicateur **arr_decoupe1** de valeur 1, tel que défini plus haut dans la description. Comme représenté à la **figure 7,** la valeur de l'indicateur **arr_decoupe1** de valeur 1 est alors inscrite sous forme compressée dans le signal de données F à la suite de la valeur de l'indicateur **type_decoupe.**

Conformément au deuxième mode de réalisation de la **figure 6B,** de la même façon que dans le mode de réalisation de la **figure 6A,** la deuxième partie $CU_2$ du bloc courant $CTU_u$ n'est pas subdivisée à nouveau en partant du principe qu'elle est représentative d'une zone homogène du bloc courant $CTU_u$.

En association avec les données codées de la deuxième partie $CU_2$, la valeur 3 de l'indicateur **type_decoupe** est inscrite sous forme compressée dans le signal de données F, à la suite de la valeur 1 de l'indicateur **arr_decoupe1.** Cette valeur est représentée en gras sur la **figure 7.**

La valeur de l'indicateur **type_decoupe** associé aux données codées de la deuxième partie $CU_2$ est inscrite sous forme compressée dans le signal de données F systématiquement avant la valeur de l'indicateur **type_decoupe** associé aux données codées de la première partie $CU_1$.

En variante, la valeur de l'indicateur **type_decoupe** associé aux données codées de la deuxième partie $CU_2$ pourrait être inscrite sous forme compressée dans le signal de données F systématiquement après la valeur de l'indicateur

type_decoupe associé aux données codées de la première partie $CU_1$.

Dans l'exemple de la **figure 7,** la partie $CU_1$ est subdivisée par exemple en quatre blocs carrés $CU1_1$, $CU2_1$, $CU3_1$, $CU4_1$, selon une méthode de subdivision classique, de type « quadtree » par exemple.

Les données codées de la partie $CU_1$ sont donc associées à l'indicateur **type_decoupe** de valeur 0, représentatif d'une telle subdivision, comme défini plus haut dans la description. Comme représenté sur la **figure 7,** cette valeur est inscrite sous forme compressée dans le signal de données F, à la suite de la valeur 3 de l'indicateur **type_decoupe.**

Dans l'exemple de la **figure 7,** le bloc $CU1_1$ n'est pas subdivisé.

Les données codées de la partie $CU_1$ sont donc associées en outre à l'indicateur **type_decoupe** de valeur 3, représentatif de l'absence d'une telle subdivision, comme défini plus haut dans la description. Comme représenté sur la **figure 7,** cette valeur est inscrite sous forme compressée dans le signal de données F, à la suite de la valeur 0 de l'indicateur **type_decoupe.**

Dans l'exemple de la **figure 7,** le bloc $CU2_1$ est subdivisé, notamment selon le type de subdivision $SUB6_2$ représenté à la **figure 5B.** Ainsi, le bloc $CU2_1$ est subdivisé en une première partie $CU21_1$ de forme carrée et en une deuxième partie $CU22_1$ à m côtés. Dans l'exemple représenté, la deuxième partie $CU22_1$ présente 8 côtés.

Les données codées de la partie $CU_1$ sont donc associées en outre à l'indicateur **type_decoupe** de valeur 2, lui-même associé à l'indicateur **arr_decoupe2** de valeur 6, tel que défini plus haut dans la description. Comme représenté sur la **figure 7,** ces valeurs 2 et 6 sont inscrites successivement sous forme compressée dans le signal de données F, à la suite de la valeur 3 de l'indicateur **type_decoupe.**

Dans l'exemple de la **figure 7,** le bloc $CU3_1$ est subdivisé en quatre blocs carrés $CU31_1$, $CU32_1$, $CU33_1$, $CU34_1$, selon une méthode de subdivision classique, de type « quadtree » par exemple.

Les données codées de la partie $CU_1$ sont donc associées en outre à l'indicateur **type_decoupe** de valeur 0, représentatif d'une telle subdivision, comme défini plus haut dans la description. Comme représenté sur la **figure 7,** cette valeur est inscrite sous forme compressée dans le signal de données F, à la suite de la valeur 6 de l'indicateur **arr_decoupe2.**

Dans l'exemple de la **figure 7,** le bloc $CU4_1$ n'est pas subdivisé.

Les données codées de la partie $CU_1$ sont donc associées en outre à l'indicateur **type_decoupe** de valeur 3, représentatif de l'absence d'une telle subdivision, comme défini plus haut dans la description. Comme représenté sur la **figure 7,** cette valeur est inscrite sous forme compressée dans le signal de données F, à la suite de la valeur 0 de l'indicateur **type_decoupe.**

La deuxième partie $CU22_1$ du bloc $CU2_1$ n'est pas subdivisée à nouveau en partant du principe qu'elle est représentative d'une zone homogène de ce bloc.

En association avec les données codées de la première partie $CU_1$, la valeur 3 de l'indicateur **type_decoupe** est alors inscrite sous forme compressée dans le signal de données F, à la suite de la valeur 3 de l'indicateur **type_decoupe.** Cette valeur est représentée en gras sur la **figure 7.**

La valeur de l'indicateur **type_decoupe** associée à la partie $CU22_1$ à m côtés du bloc $CU2_1$ est inscrite sous forme compressée dans le signal de données F systématiquement avant la valeur de l'indicateur **type_decoupe** associée à la partie carrée $CU21_1$ du bloc $CU2_1$.

En variante, la valeur de l'indicateur **type_decoupe** associée à la partie $CU22_1$ à m côtés du bloc $CU2_1$ pourrait être inscrite sous forme compressée dans le signal de données F systématiquement après la valeur de l'indicateur **type_decoupe** associée à la partie carrée $CU21_1$ du bloc $CU2_1$.

Dans l'exemple de la **figure 7,** la première partie $CU21_1$ du bloc $CU2_1$ n'est pas subdivisée. En association avec les données codées de la première partie $CU_1$, la valeur 3 de l'indicateur **type_decoupe** est alors inscrite sous forme compressée dans le signal de données F, à la suite de la valeur 3 de l'indicateur **type_decoupe** associée à la partie $CU22_1$ à m côtés du bloc $CU2_1$.

Dans l'exemple de la **figure 7,** les quatre blocs $CU31_1$, $CU32_1$, $CU33_1$, $CU34_1$ du bloc $CU3_1$ ne sont pas subdivisés. La valeur 3 de l'indicateur **type_decoupe** est alors inscrite sous forme compressée successivement quatre fois dans le signal de données F, à la suite de la valeur 3 de l'indicateur **type_decoupe** associée à la partie $CU21_1$ du bloc $CU2_1$.

En variante à ce deuxième mode de réalisation, les deux valeurs 3 de l'indicateur **type_decoupe** telles que représentées en gras sur la **figure 7** et représentatives de l'absence de subdivision des parties à m côtés $CU_2$ et $CU22_1$ du bloc courant $CTU_u$ ne sont pas inscrites dans le signal de données F, ce qui permet de réduire le coût de signalisation. Il est en effet supposé au codage, comme au décodage, qu'une partie à m côtés du bloc courant n'est systématiquement pas subdivisée. Ainsi, la transmission au décodeur d'un indicateur type_decoupe de valeur 3 ne s'avère pas nécessaire.

On fait référence à nouveau à la **figure 6B.**

Au cours d'une sous-étape C620 représentée à la **figure 6B,** le module de codage UCO sélectionne, comme partie courante $CU_k$ (k=1 ou k=2), soit d'abord la partie carrée $CU_1$, soit d'abord la partie $CU_2$ à m côtés.

Au cours d'une sous-étape C621 représentée à la **figure 6B,** le module de codage UCO teste si l'indice k associé à la partie courante $CU_k$ vaut 1 ou 2.

Si l'indice k est égal à 2, la partie $CU_2$ du bloc courant $CTU_u$ est codée selon les sous-étapes C611 à C615 de la **figure 6A.**

Si l'indice k est égal à 1, au cours d'une sous-étape C622 représentée à la **figure 6B,** le module de codage UCO de la **figure 4** sélectionne une sous-partie courante $CU_{k'}$ de la première partie $CU_1$ du bloc courant $CTU_u$, tel que $1 \le k' \le N$.

Dans l'exemple représenté sur la **figure 7,** N=8, puisque la première partie $CU_1$ du bloc courant $CTU_u$ a été subdivisée en huit sous-parties de type « coding unit » $CU1_1$, $CU21_1$, $CU22_1$, $CU31_1$, $CU32_1$, $CU33_1$, $CU34_1$, $CU4_1$.

Au cours d'une sous-étape C623 représentée à la **figure 6B,** le module PRED_CO de la **figure 4** sélectionne pour cette sous-partie courante $CU_{k'}$ un mode de prédiction inter ou intra, par exemple par mise en compétition de ces modes selon un critère débit-distorsion. Le mode de prédiction sélectionné est associé à un indicateur $I_{PR}$ qui est destiné à être transmis dans le signal de données F.

Au cours d'une sous-étape optionnelle C624 représentée à la **figure 6B,** le module de partitionnement MP_CO de la **figure 4** subdivise la sous-partie courante $CU_{k'}$ en une pluralité W de sous-parties de prédiction $PU_1$, $PU_2$, ..., $PU_Z$, ...$PU_W$ $(1 \le z \le W)$ du type « prédiction unit » précité. Une telle subdivision peut être classique ou bien comme représenté sur les **figures 5A** et **5B.** De façon similaire à ce qui a été décrit en référence au mode de réalisation de la **figure 6A,** une succession d'indicateurs représentatifs de la subdivision est destinée à être transmise dans le signal de données F.

Au cours d'une sous-étape C625 optionnelle représentée à la **figure 6B,** le module de codage UCO de la **figure 4** sélectionne une première sous-partie courante $PU_Z$. Une telle sélection est effectuée dans un ordre prédéfini, tel que par exemple l'ordre lexicographique.

Au cours d'une sous-étape C626 optionnelle représentée à la **figure 6B,** le module PRED_CO de la **figure 4** sélectionne pour la sous-partie courant $PU_Z$ les paramètres de prédiction optimaux associés au mode de prédiction sélectionné à la sous-étape C623 précitée. Si par exemple, le mode de prédiction INTER a été sélectionné à la sous-étape C623 précitée, les paramètres de prédiction optimaux sont un ou plusieurs vecteurs de mouvement, ainsi que une ou plusieurs images de référence, de tels paramètres optimaux permettant d'obtenir les meilleures performances de codage de la sous-partie courante $PU_Z$ selon un critère prédéterminé, tel que par exemple le critère débit-distorsion. Si par exemple, le mode de prédiction INTRA a été sélectionné à la sous-étape C623 précitée, les paramètres de prédiction optimaux sont associés à un mode INTRA sélectionné parmi différents modes INTRA disponibles. Comme pour le mode INTER, les paramètres de prédiction optimaux sont ceux qui permettent d'obtenir les meilleures performances de codage de la sous-partie courante $PU_Z$ selon un critère prédéterminé, tel que par exemple le critère débit-distorsion.

Les sous-étapes C625 à C626 sont itérées pour chacune des sous-parties $PU_1$, $PU_2$, ..., $PU_Z$, ..., PUw de la sous-partie $CU_{k'}$ courante de la première partie $CU_1$ du bloc courant $CTU_u$, dans l'ordre lexicographique prédéterminé.

Au cours d'une sous-étape optionnelle C627 représentée à la **figure 6B,** le module de partitionnement MP_CO de la **figure 4** subdivise la sous-partie courante $CU_{k'}$ en une pluralité Z de sous-parties de transformée $TU_1$, $TU_2$, ..., $TU_w$,...$TU_Z$ $(1 \le w \le Z)$ du type « transform unit» précité. Une telle subdivision peut être classique ou bien comme représenté sur les **figures 5A** et **5B.** De façon similaire à ce qui a été décrit en référence au mode de réalisation de la **figure 6A,** une succession d'indicateurs représentatifs de la subdivision est destinée à être transmise dans le signal de données F.

Au cours d'une sous-étape C628 optionnelle représentée à la **figure 6B,** le module de codage UCO de la **figure 4** sélectionne une première sous-partie de transformée courante $TU_w$. Une telle sélection est effectuée dans un ordre prédéfini, tel que par exemple l'ordre lexicographique.

Au cours d'une sous-étape C629 représentée à la **figure 6B,** le module de calcul CAL3_CO de la **figure 4** procède, d'une façon similaire à la sous-étape C612 de la **figure 6A,** au calcul d'une sous-partie résidu $TUr_w$.

Au cours d'une sous-étape C630 représentée à la **figure 6B,** le module MT_CO de la **figure 4** procède à la transformation de la sous-partie résidu $TUr_w$ selon une opération classique de transformation directe, telle que par exemple une transformation en cosinus discrètes de type DCT, pour produire une sous-partie transformée $TUt_w$.

Au cours d'une sous-étape C631 représentée à la **figure 6B,** le module MQ_CO de la **figure 4** procède à la quantification de la sous-partie transformée $TUt_w$ selon une opération classique de quantification, telle que par exemple une quantification scalaire. Une sous-partie $TUq_w$, formée de coefficients quantifiés, est alors obtenue.

Au cours d'une sous-étape C632 représentée à la **figure 6B,** le module MCE_CO de la **figure 4** procède au codage entropique des coefficients quantifiés $TUq_w$.

L'ensemble des sous-étapes C628 à C632 est itéré pour chacune des sous-parties $TU_1$, $TU_2$, ..., $TU_w$, ..., TUz de la sous-partie $CU_{k'}$ courante de la première partie $CU_1$ du bloc courant $CTU_u$, dans l'ordre lexicographique prédéterminé.

Dans le cas où la sous-partie transformée courante $TU_w$ a une forme géométrique à m côtés, une sous-étape intermédiaire C6290 est mise en oeuvre entre les sous-étapes C629 et C630 précitées. Au cours de cette sous-étape intermédiaire, les pixels résiduels de la sous-partie résidu $TUr_w$ à m côtés sont complétés par des pixels de valeur nulle ou codés selon une méthode de codage prédéterminée, jusqu'à l'obtention d'un bloc de pixels carré ou rectangulaire.

La sous-étape C6290 précitée est mise en oeuvre par le module logiciel de calcul CAL4_CO tel que représenté à la **figure 4.**

Si la sous-étape de calcul C6290 est mise en oeuvre, au cours de la sous-étape C631 représentée à la **figure 6B,** le module MQ_CO de la **figure 4** procède à la quantification de la sous-partie courante transformée $TUt_w$ à l'exclusion des pixels rajoutés au cours de la sous-étape C6290 et qui ont subi une transformation au cours de la sous-étape C630.

L'ensemble des sous-étapes C622 à C632 est itéré pour chacune des sous-parties $CU_1$, $CU_2$, ..., $CU_{k'}$, ..., $CU_N$ de la première partie $CU_1$ courante du bloc courant $CTU_u$, dans l'ordre lexicographique prédéterminé.

Description détaillée de la partie décodage

Un mode de réalisation de l'invention va maintenant être décrit, dans lequel le procédé de décodage selon l'invention est utilisé pour décoder un signal de données représentatif d'une image ou d'une séquence d'images qui est apte à être décodé par un décodeur conforme à l'une quelconque des normes de décodage vidéo actuelles ou à venir.

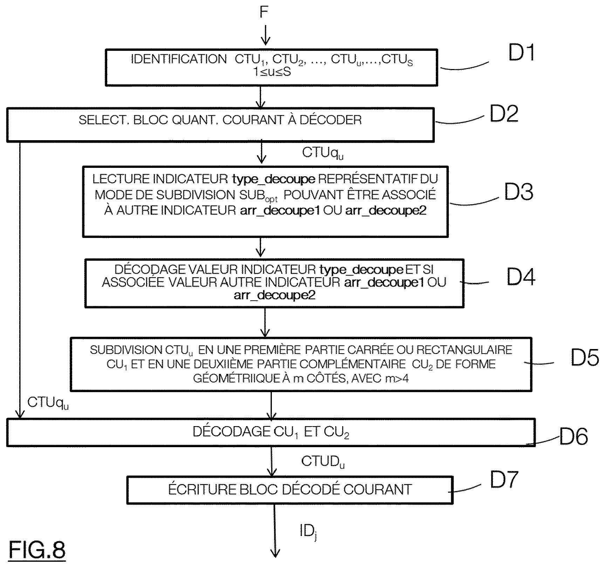

Dans ce mode de réalisation, le procédé de décodage selon l'invention est par exemple implémenté de manière logicielle ou matérielle par modifications d'un tel décodeur. Le procédé de décodage selon l'invention est représenté sous la forme d'un algorithme comportant des étapes D1 à D7 telles que représentées à la **figure 8.**

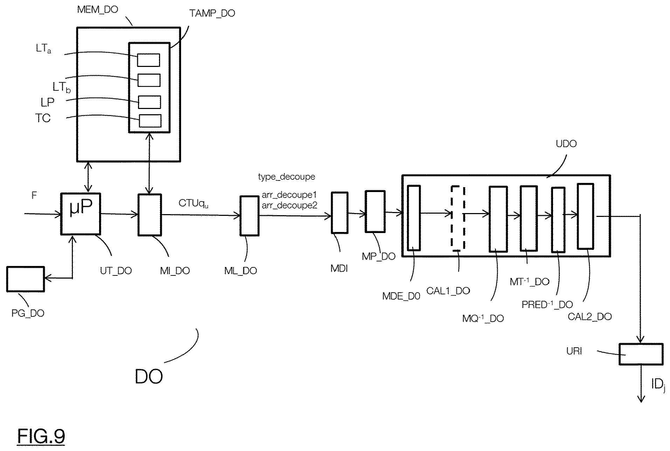

Selon le mode de réalisation de l'invention, le procédé de décodage selon l'invention est implémenté dans un dispositif de décodage ou décodeur DO représenté à la **figure 9.**

Comme illustré en **figure 9,** selon ce mode de réalisation de l'invention, le décodeur DO comprend une mémoire MEM_DO qui comprend elle-même une mémoire tampon TAMP_DO, une unité de traitement UT_DO équipée par exemple d'un microprocesseur $\mu$P et pilotée par un programme d'ordinateur PG_DO qui met en oeuvre le procédé de décodage selon l'invention. A l'initialisation, les instructions de code du programme d'ordinateur PG_DO sont par exemple chargées dans une mémoire RAM avant d'être exécutées par le processeur de l'unité de traitement UT_DO.

Le procédé de décodage représenté sur la **figure 8** s'applique à un signal de données représentatif d'une image courante $IC_j$ fixe à décoder ou d'une séquence d'images à décoder.

A cet effet, des informations représentatives de l'image courante $IC_j$ à décoder sont identifiées dans le signal de données F reçu au décodeur DO, tel que délivré à la suite du procédé de codage de la **figure 3.**

En référence à la **figure 8,** au cours d'une étape D1, il est procédé à l'identification dans le signal F des blocs quantifiés $CTUq_1$, $CTUq_2$, ..., $CTUq_u$, ..., CTUqs ($1 \leq u \leq S$) associés respectivement aux blocs $CTU_1$, $CTU_2$, ..., $CTU_u$, ..., CTUs codés précédemment conformément à l'ordre lexicographique précité, selon le procédé de codage de la **figure 3.**

Une telle étape d'identification est mise en oeuvre par un processeur ou module logiciel d'identification MI_DO d'analyse de flux, tel que représenté à la **figure 9,** ledit module étant piloté par le microprocesseur $\mu$P de l'unité de traitement UT_DO.

D'autres types de parcours que celui qui vient d'être décrit ci-dessus sont bien sûr possibles et dépendent de l'ordre de parcours choisi au codage.

De façon préférentielle, chacun des blocs à décoder $CTU_1$, $CTU_2$, ..., $CTU_u$, ..., CTUs présente une forme carrée et comprend NxN pixels, avec $N \geq 2$.

Selon une alternative, chacun des blocs à décoder $CTU_1$, $CTU_2$, ..., $CTU_u$, ..., CTUs présente une forme rectangulaire et comprend NxP pixels, avec $N \geq 1$ et $P \geq 2$.

Au cours d'une étape D2 représentée à la **figure 8,** le décodeur DO de la **figure 9** sélectionne comme bloc courant le premier bloc quantifié $CTUq_u$ qui contient des données quantifiées qui ont été codées au cours de l'étape C6 de la **figure 3.**

Au cours d'une étape D3 représentée à la **figure 8,** en association avec le bloc quantifié $CTUq_u$ qui a été sélectionné, il est procédé à la lecture de la valeur compressée de l'élément de syntaxe **type_decoupe** qui a été sélectionné à l'issue de l'étape C4 de la **figure 3** et, s'il y a lieu, à la valeur compressée de l'élément de syntaxe **arr_decoupe1** ou **arr_decoupe2** qui lui est associé.

Comme explique plus haut dans la description, l'élément de syntaxe **type_decoupe** désigne l'indicateur représentatif d'un mode de subdivision donné. Selon un mode de réalisation préférentiel, l'élément de syntaxe **type_decoupe** prend par exemple trois valeurs :

- 0 pour indiquer une subdivision classique du bloc courant en quatre blocs rectangulaires ou carrés,
- 1 pour indiquer une subdivision du bloc courant conformément au mode de subdivision représenté sur la **figure 5A,**
- 2 pour indiquer une subdivision du bloc courant conformément au mode de subdivision représenté sur la **figure 5B,**
- 3 pour indiquer une absence de subdivision du bloc courant.

L'étape de lecture D3 est effectuée par un processeur ou module logiciel de lecture ML_DO, tel que représenté à la **figure 9,** lequel module est piloté par le microprocesseur $\mu$P de l'unité de traitement UT_DO.

De façon identique au codeur CO de la **figure 4,** sont stockées dans la mémoire tampon TAMP_DO du codeur DO de la **figure 9** :

- une liste LT$_a$ prédéfinie de plusieurs ensembles de coordonnées définissant chacun un bloc rectangulaire d'une forme prédéterminée,
- une liste LT$_b$ prédéfinie de plusieurs ensembles de coordonnées définissant chacun un bloc rectangulaire d'une forme prédéterminée,
- une table de correspondance TC.

Au cours d'une étape D4 représentée à la **figure 8,** il est procédé au décodage de la valeur de l'élément de syntaxe **type_decoupe** qui a été lue à l'étape D3 précitée et, s'il y a lieu, au décodage de la valeur de l'élément de syntaxe **arr_decoupe1** ou **arr_decoupe2** qui lui est associée.

L'étape D4 précitée est mise en oeuvre par un processeur ou module logiciel de décodage d'indicateur MDI tel que représenté à la **figure 9,** lequel module est piloté par le microprocesseur $\mu$P de l'unité de traitement UT_DO.

Au cours d'une étape D5 représentée à la **figure 8,** il est procédé à la subdivision du bloc courant CTU$_u$ en au moins une première partie CU$_1$ et une deuxième partie CU$_2$, les première et deuxième parties étant complémentaires l'une de l'autre. Selon l'invention :

- la première partie CU$_1$ a une forme rectangulaire ou carrée,
- et la deuxième partie CU$_2$ a une forme géométrique à m côtés, avec m>4.

Selon un mode préféré de réalisation, le bloc courant CTU$_u$ est subdivisé :

- en une première partie CU$_1$ de forme rectangulaire ou carrée ou bien en une pluralité de parties de forme rectangulaire ou carrée,
- et en au plus une deuxième partie CU$_2$ de forme géométrique à m côtés.

Des exemples de subdivision ont été présentés en référence aux **figures 5A** et **5B** ci-dessus et ne seront pas à nouveau décrits ici.

L'étape de subdivision D5 est effectuée par un processeur ou module logiciel de partitionnement MP_DO, tel que représenté à la **figure 9,** lequel module est piloté par le microprocesseur $\mu$P de l'unité de traitement UT_DO.

Au cours d'une étape D6 représentée à la **figure 8,** il est procédé au décodage des parties CU$_1$ et CU$_2$ du bloc courant CTU$_u$ à décoder selon un ordre de parcours prédéterminé. Selon un mode de réalisation préféré, la première partie CU$_1$ est décodée avant la deuxième partie CU$_2$. En alternative, la première partie CU$_1$ est décodée après la deuxième partie CU$_2$.

L'étape de décodage D6 est mise en oeuvre par un processeur ou module logiciel de décodage UDO tel que représenté sur la **figure 9,** lequel module est piloté par le microprocesseur $\mu$P de l'unité de traitement UT_DO.

Comme représenté plus en détail sur la **figure 9,** le module de décodage UDO comprend classiquement :

- un processeur ou module logiciel MDE_DO de décodage entropique, par exemple de type CABAC ("Context Adaptive Binary Arithmetic Coder" en anglais) ou encore un décodeur de Huffman connu en tant que tel,
- un processeur ou module logiciel MQ1$^{-1}$_DO de déquantification,
- un processeur ou module logiciel MT1$^{-1}$_DO de transformation inverse de type DCT$^{-1}$ (abréviation anglaise de « Discrete Cosine Transform »), DST$^{-1}$ (abréviation anglaise de « Discrète Sine Transform »), DWT$^{-1}$ (abréviation anglaise de « Discrete Wavelet Transform »),
- un processeur ou module logiciel PRED1$^{-1}$_DO de prédiction inverse,
- un processeur ou module CAL2_DO de calcul de reconstruction de bloc.

A l'issue de l'étape D6, un bloc décodé courant CTUD$_u$ est obtenu.

Au cours d'une étape D7 représentée à la **figure 8,** ledit bloc décodé CTUD$_u$ est écrit dans une image décodée ID$_j$.

Une telle étape est mise en oeuvre par un processeur ou module logiciel URI de reconstruction d'image tel que représenté sur la **figure 9,** ledit module étant piloté par le microprocesseur $\mu$P du module de traitement UT_DO.

Les étapes de décodage qui viennent d'être décrites ci-dessus sont mises en oeuvre pour tous les blocs CTU$_1$, CTU$_2$, ..., CTU$_u$, ..., CTUs à décoder de l'image courante IC$_j$ considérée, dans un ordre prédéterminé qui est par exemple l'ordre lexicographique.

D'autres types de parcours que celui qui vient d'être décrit ci-dessus sont bien sûr possibles.

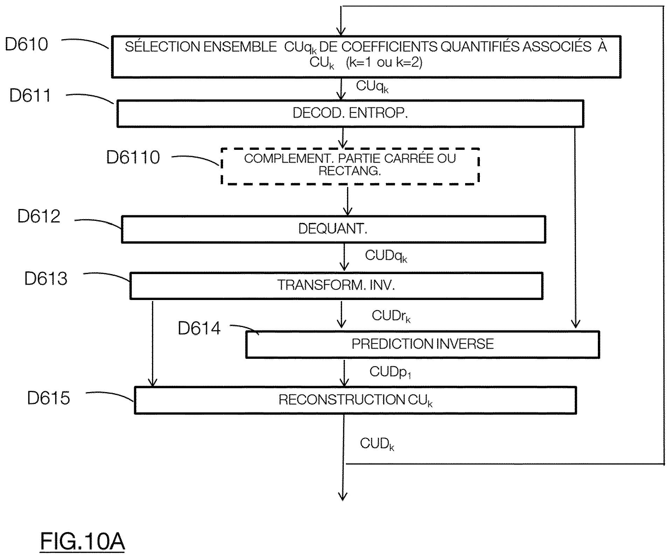

On va maintenant décrire, en référence à la **figure 10A,** un premier mode de réalisation des différentes sous-étapes mises en oeuvre lors de l'étape de décodage D6 précitée, dans le module de décodage UDO représenté sur la **figure 9.**

Conformément à ce premier mode de réalisation, le signal de données F contient les indicateurs de partitionnement d'un bloc courant $CTU_u$ qui a été codé selon le mode de réalisation de la **figure 6A**. A cet effet, comme décrit plus haut dans la description en liaison avec le mode de réalisation de la **figure 6A,** le signal F contient les quatre valeurs suivantes 1133 qui ont été décodées à l'issue de l'étape D4 précitée et qui sont représentatives :

- du partitionnement du bloc courant $CTU_u$ selon l'un des modes de subdivision représentés sur la **figure 5A** et plus précisément selon le type de subdivision $SUBD2_1$ de la **figure 5A,**
- et de l'absence de subdivision des parties $CU_1$ et $CU_2$ du bloc courant $CTU_u$.

En variante, le signal de données F contient les trois valeurs suivantes 113, dans le cas où l'indicateur **type_decoupe** de valeur 3 associée aux données codées de la deuxième partie $CU_2$ n'a pas été inscrit dans le signal de données F, compte tenu du fait que la deuxième partie $CU_2$ définit une zone homogène du bloc courant $CTU_u$.

En conséquence, l'indicateur **type_decoupe** est mis systématiquement à la valeur prédéterminée 3, de façon à ce que la deuxième partie $CU_2$ ne soit pas subdivisée au décodage.

Au cours d'une sous-étape D610 représentée à la **figure 10A,** le module de décodage UDO sélectionne comme ensemble de coefficients quantifiés courant $CUq_k$ associés à la partie courante $CU_k$ (k=1 ou k=2), soit d'abord l'ensemble de coefficients quantifiés associé à la partie carrée $CU_1$, soit d'abord l'ensemble de coefficients quantifiés associé à la partie $CU_2$ à m côtés.

Au cours d'une sous-étape D611 représentée à la **figure 10A,** il est procédé à un décodage entropique de l'ensemble de coefficients quantifiés $CUq_1$ courant associé à la première partie $CU_1$. Dans le mode préféré de réalisation, le décodage effectué est un décodage entropique de type arithmétique ou de Huffman. La sous-étape D611 consiste alors à :

- lire le ou les symboles d'un ensemble prédéterminé de symboles qui sont associés à l'ensemble de coefficients quantifiés $Cuq_1$ courant,
- associer des informations numériques, telles que des bits, au(x) symbole(s) lu(s).

A l'issue de la sous-étape D611 précitée, est obtenue une pluralité d'informations numériques associées à l'ensemble de coefficients quantifiés $Cuq_1$ courant.

Une telle sous-étape D611 de décodage entropique est mise en oeuvre par le module de décodage entropique MDE_DO représenté sur la **figure 9.**

Au cours de la sous-étape D611 précitée, sont également décodées les informations relatives au codage prédictif de la partie $CU_1$ tel que mis en oeuvre à la sous-étape C611 de la **figure 6A,** et qui ont été inscrites dans le signal de données F. De telles informations de reconstruction comprennent notamment le type de prédiction (inter ou intra), et le cas échéant, le mode de prédiction intra ou bien l'indice d'image de référence et le vecteur de déplacement utilisés dans le mode de prédiction inter.

Au cours d'une sous-étape D612 représentée à la **figure 10A,** il est procédé à la déquantification des informations numériques obtenues à la suite de la sous-étape D611, selon une opération classique de déquantification qui est l'opération inverse de la quantification mise en oeuvre lors de la sous-étape de quantification C614 de la **figure 6A.** Un ensemble de coefficients déquantifiés $CUDq_1$ courant est alors obtenu à l'issue de la sous-étape D612. Une telle sous-étape D612 est effectuée au moyen du module de déquantification $MQ^{-1}$_DO, tel que représenté à la **figure 9.**

Au cours d'une sous-étape D613 représentée à la **figure 10A,** il est procédé à une transformation de l'ensemble de coefficients déquantifiés $CUDq_1$ courant, une telle transformation étant une transformation directe inverse, telle que par exemple une transformation en cosinus discrètes inverse de type $DCT^{-1}$. Cette transformation est l'opération inverse de la transformation effectuée à la sous-étape C613 de la **figure 6A.** A l'issue de la sous-étape D613, est obtenue une partie résidu décodée CUDri. Une telle opération est effectuée par le module $MT^{-1}$_DO représenté sur la **figure 9.**

Au cours d'une sous-étape D614 représentée à la **figure 10A,** le module $PRED^{-1}$_DO de la **figure 9** procède au décodage prédictif de la partie courante $CU_1$ à l'aide des informations relatives au codage prédictif de la partie $CU_1$ qui ont été décodées au cours de la sous-étape D611 précitée.

Ladite sous-étape de décodage prédictif précitée permet de construire une partie prédite $CUDp_1$ qui est une approximation de la partie courante $CU_1$ à décoder.

Au cours d'une sous-étape D615 représentée à la **figure 10A,** le module CAL2_DO de la **figure 9** procède à la reconstruction de la partie courante $CU_1$ en ajoutant à la partie résidu décodée CUDri, obtenue à l'issue de la sous-étape D613, la partie prédite $CUDp_1$ qui a été obtenue à l'issue de la sous-étape D614 précitée.

Les sous-étapes D610 à D615 précitées sont ensuite itérées en vue de décoder la deuxième partie $CU_2$ à m côtés du bloc courant $CTU_u$.

Conformément à l'invention, dans le cas du décodage de la deuxième partie $CU_2$ à m côtés, une ou plusieurs informations de reconstruction des pixels de la deuxième partie $CU_2$ sont mises à des valeurs prédéterminées.

Ainsi, de façon préférentielle, au cours de la sous-étape D614 de décodage prédictif de la partie $CU_2$ du bloc courant $CTU_u$, les pixels de la partie $CU_2$ à décoder sont prédits par rapport respectivement à des pixels de valeurs correspondantes prédéterminées. De telles valeurs sont stockées dans une liste LP contenue dans la mémoire tampon TAMP_DO du décodeur DO de la **figure 9.**

Selon une variante de réalisation préférée, la sous-étape D610 de la **figure 10A** n'est pas mise en oeuvre puisqu'aucun ensemble de coefficients quantifiés associés à la partie $CU_2$ à m côtés n'a été transmis dans le signal de données F. Les coefficients quantifiés de la partie résidu quantifiée $CUq_2$ sont alors directement tous mis à zéro par le module de décodage UDO de la **figure 9.**

Une telle disposition est rendue avantageuse par le fait que la partie $CU_2$ du bloc courant $CTU_u$ qui a été codée est considérée homogène.

Selon une autre variante de réalisation préférée, la sous-étape D611 précitée n'est pas mise en oeuvre dans sa totalité, le décodeur DO déduisant directement à la suite de la sous-étape D610 précitée des valeurs prédéterminées d'informations de reconstruction associées à la partie résidu $CUr_2$.

Une telle disposition est rendue avantageuse par le fait que la partie $CU_2$ du bloc courant $CTU_u$ qui a été codée est considérée homogène.

En variante, les pixels de la partie $CU_2$ à décoder sont prédits classiquement, de la même façon que la partie $CU_1$.

Conformément à l'invention, entre les sous-étapes D611 et D612 précitées, une étape intermédiaire D6110 est mise en oeuvre. Au cours de cette étape intermédiaire, les valeurs de pixels décodés qui ont été obtenues à la suite de l'étape de décodage entropique de la pluralité d'informations numériques associées à l'ensemble de coefficients quantifiés $CUq_2$ courant sont complétées par des valeurs de pixels prédéterminées, jusqu'à l'obtention d'un bloc de valeurs de pixels carré ou rectangulaire.

Selon différents modes de réalisation possibles, les valeurs de pixels associées à l'ensemble de coefficients quantifiés $CUq_2$ courant peuvent être complétées :

- par des valeurs respectives de pixels nulles,
- par des valeurs de pixels reconstruits classiquement par interpolation,
- par des valeurs de pixels reconstruits classiquement à l'aide de la technique dite de « inpaiting ».

La sous-étape D6110 précitée est mise en oeuvre par un module logiciel de calcul CAL1_DO tel que représenté à la **figure 9,** lequel module est piloté par le microprocesseur $\mu$P de l'unité de traitement UT_DO.

Une telle disposition permet de réutiliser le module logiciel de transformation $MT^{-1}$_DO de la **figure 9** qui applique classiquement des transformées de blocs carrés ou rectangulaires.

Compte tenu du fait que la sous-étape D6110 ne s'applique que pour les valeurs de pixels décodés qui ont été obtenues à la suite de l'étape de décodage entropique de la pluralité d'informations numériques associées à l'ensemble de coefficients quantifiés $CUq_2$ courant de forme géométrique à m côtés, cette étape, de même que le module de calcul CAL1_DO, sont représentés en pointillés, respectivement sur les **figures 10A** et **9.**

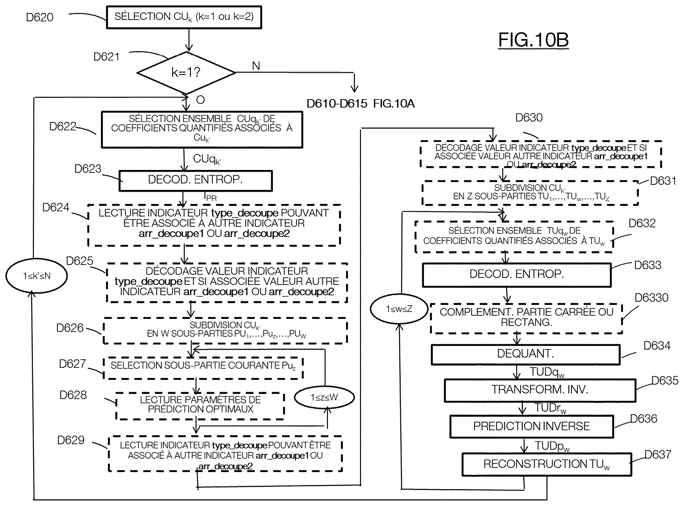

On va maintenant décrire, en référence à la **figure 10B,** un deuxième mode de réalisation des différentes sous-étapes mises en oeuvre lors de l'étape de décodage D6 précitée, dans le module de codage UDO représenté sur la **figure 9.** Un tel deuxième mode ne relève pas de l'invention et est donné uniquement à titre illustratif.

Ce deuxième mode de réalisation se distingue de celui de la **figure 10A** par le fait que la première partie $CU_1$ à décoder du bloc courant $CTU_u$ est subdivisée à nouveau.

Conformément à ce deuxième mode de réalisation, le signal de données F contient les indicateurs de partitionnement d'un bloc courant $CTU_u$ qui a été codé selon le mode de réalisation de la **figure 6B.** A cet effet, comme décrit plus haut dans la description en liaison avec le mode de réalisation de la **figure 6B,** le signal F contient les quinze valeurs suivantes 11**3**032603**3**33333 telles que représentées à la **figure 7** et qui ont été décodées à l'issue de l'étape D4 précitée.

De telles valeurs sont représentatives :

- du partitionnement du bloc courant $CTU_u$ selon l'un des modes de subdivision représentés sur la **figure 5A** et plus précisément selon le type de subdivision $SUBD2_1$ de la **figure 5A,**
- de l'absence de subdivision de la deuxième partie $CU_2$ à m côtés du bloc courant $CTU_u$,
- de la subdivision de la première partie $CU_1$ du bloc courant $CTU_u$ telle que représentée à la **figure 7.**

En variante, le signal de données F ne contient pas les deux valeurs égales à 3 représentées en gras, dans le cas où :

- l'indicateur **type_decoupe** de valeur 3 associé aux données codées de la deuxième partie $CU_2$ n'a pas été inscrit dans le signal de données F, compte tenu du fait que la deuxième partie $CU_2$ définit une zone homogène du bloc courant $CTU_u$,

- l'indicateur **type_decoupe** de valeur 3 associé aux données codées de la deuxième partie $CU22_1$ à m côtés du bloc $CU2_1$ telle que représentée à la **figure 7,** compte tenu du fait que la deuxième partie $CU22_1$ définit une zone homogène du bloc $CU2_1$.

En conséquence, l'indicateur **type_decoupe** est mis systématiquement à la valeur prédéterminée 3, de façon à ce que ni la deuxième partie $CU_2$ du bloc courant $CTU_u$ à décoder, ni la deuxième partie $CU22_1$ à m côtés du bloc $CU2_1$ du bloc courant $CTU_u$ à décoder, ne soit subdivisée au décodage.

Au cours d'une sous-étape D620 représentée à la **figure 10B,** le module de décodage UDO sélectionne comme ensemble de coefficients quantifiés $CUq_k$ courant associés à la partie courante $CU_k$ (k=1 ou k=2), soit d'abord l'ensemble de coefficients quantifiés associé à la partie carrée $CU_1$, soit d'abord l'ensemble de coefficients quantifiés associé à la partie $CU_2$ à m côtés.

Au cours d'une sous-étape D621 représentée à la **figure 10B,** le module de décodage UDO teste si l'indice k associé à la partie courante $CU_k$ à décoder vaut 1 ou 2.

Si l'indice k est égal à 2, la partie $CU_2$ du bloc courant $CTU_u$ à décoder est décodée selon les sous-étapes D610 à D615 de la **figure 10A.**

Si l'indice k est égal à 1, au cours d'une sous-étape D622 représentée à la **figure 10B,** le module de décodage UDO de la **figure 9** sélectionne une sous-partie courante $CU_{k'}$ à décoder de la première partie $CU_1$ du bloc courant $CTU_u$ à décoder, tel que $1 \leq k' \leq N$.

Dans l'exemple représenté sur la **figure 7,** N=8, puisque la première partie $CU_1$ du bloc courant $CTU_u$ a été subdivisée en huit sous-parties de type « coding unit » $CU1_1$, $CU21_1$, $CU22_1$, $CU31_1$, $CU32_1$, $CU33_1$, $CU34_1$, $CU4_1$.

Au cours d'une sous-étape D623 représentée à la **figure 10B,** le module de décodage entropique MDE_DO de la **figure 9** procède à un décodage entropique de l'ensemble de coefficients quantifiés $CUq_{k'}$ courant associé à la sous-partie courante $CU_{k'}$ de la première partie $CU_1$ du bloc courant $CTU_u$ à décoder. Dans le mode préféré de réalisation, le décodage effectué est un décodage entropique de type arithmétique ou de Huffman. La sous-étape D623 consiste alors à :

- lire le ou les symboles d'un ensemble prédéterminé de symboles qui sont associés à l'ensemble de coefficients quantifiés $CUq_{k'}$ courant,
- associer des informations numériques, telles que des bits, au(x) symbole(s) lu(s).

A l'issue de la sous-étape D623 précitée, est obtenue une pluralité d'informations numériques associées à l'ensemble de coefficients quantifiés $CUq_{k'}$ courant.

Au cours de la sous-étape D623, le module de décodage entropique MDE_DO de la **figure 9** procède également à un décodage entropique de l'indicateur $I_{PR}$ représentatif du mode de prédiction inter ou intra qui a été sélectionné pour cette sous-partie courante $CU_{k'}$ au cours de la sous-étape C623 de la **figure 6B.**

Au cours d'une sous-étape D624 optionnelle représentée à la **figure 10B,** dans le cas où la sous-partie courante $CU_{k'}$ à décoder a été subdivisée au cours de la sous-étape C626 de la **figure 6B** en une pluralité W de sous-parties de prédiction $PU_1$, $PU_2$, ..., $PU_z$, ...$PUw$ ($1 \leq z \leq W$), le module logiciel de lecture ML_DO de la **figure 9** procède à la lecture de la valeur compressée de l'indicateur représentatif d'une telle subdivision. Un tel indicateur consiste en l'élément de syntaxe **type_decoupe** et, s'il y a lieu, en l'élément de syntaxe **arr_decoupe1** ou **arr_decoupe2** qui lui est associé.

Au cours d'une sous-étape D625 optionnelle représentée à la **figure 10B,** le module logiciel de décodage d'indicateur MDI de la **figure 9** procède au décodage de la valeur de l'élément de syntaxe **type_decoupe** qui a été lue à la sous-étape D624 précitée et, s'il y a lieu, au décodage de la valeur de l'élément de syntaxe **arr_decoupe1** ou **arr_decoupe2** qui lui est associée.

Au cours d'une sous-étape D626 optionnelle représentée à la **figure 10B,** le module logiciel de partitionnement MP_DO de la **figure 9** subdivise la sous-partie courante $CU_{k'}$ à décoder en une pluralité W de sous-parties de prédiction $PU_1$, $PU_2$, ..., $PU_z$, ..., $PUw$ ($1 \leq z \leq W$).

Au cours d'une sous-étape D627 optionnelle représentée à la **figure 10B,** le module de décodage UDO de la **figure 9** sélectionne une première sous-partie courante $PU_z$. Une telle sélection est effectuée dans un ordre prédéfini, tel que par exemple l'ordre lexicographique.

Au cours d'une sous-étape D628 optionnelle représentée à la **figure 6B,** le module de décodage entropique MDE_DO de la **figure 9** procède, en association avec la sous-partie courante $PU_z$, à un décodage entropique des paramètres de prédiction optimaux qui ont été sélectionnés au cours de la sous-étape C626 de la **figure 6B,** en association avec l'indicateur $I_{PR}$ qui est représentatif du mode de prédiction sélectionné à la sous-étape C623 précitée et qui a été décodé à la sous-étape D623. Si par exemple, le mode de prédiction INTER a été sélectionné à la sous-étape C623 précitée, les paramètres de prédiction optimaux décodés sont un ou plusieurs vecteurs de mouvement, ainsi qu'une

EP 4 311 240 A2

ou plusieurs images de référence. Si par exemple, le mode de prédiction INTRA a été sélectionné à la sous-étape C623 précitée, les paramètres de prédiction optimaux sont associés à un mode INTRA sélectionné parmi différents modes INTRA disponibles.

Les sous-étapes D627 à D628 sont itérées pour chacune des sous-parties $PU_1$, $PU_2$, ..., $PU_z$, ..., PUw de la sous-partie courante $CU_{k'}$ à décoder de la première partie $CU_1$ du bloc courant $CTU_u$, dans l'ordre lexicographique prédéterminé.

Au cours d'une sous-étape D629 optionnelle représentée à la **figure 10B,** dans le cas où la sous-partie courante $CU_{k'}$ à décoder a été subdivisée, au cours de la sous-étape C627 de la **figure 6B,** en une pluralité Z de sous-parties de transformée $TU_1$, $TU_2$, ..., $TU_w$, ...$TU_Z$ ($1 \leq w \leq Z$), le module logiciel de lecture ML_DO de la **figure 9** procède à la lecture de la valeur compressée de l'indicateur représentatif d'une telle subdivision. Un tel indicateur consiste en l'élément de syntaxe **type_decoupe** et, s'il y a lieu, en l'élément de syntaxe **arr_decoupe1** ou **arr_decoupe2** qui lui est associé.

Au cours d'une sous-étape D630 optionnelle représentée à la **figure 10B,** le module logiciel de décodage d'indicateur MDI de la **figure 9** procède au décodage de la valeur de l'élément de syntaxe **type_decoupe** qui a été lue à la sous-étape D629 précitée et, s'il y a lieu, au décodage de la valeur de l'élément de syntaxe **arr_decoupe1** ou **arr_decoupe2** qui lui est associée.

Au cours d'une sous-étape D631 optionnelle représentée à la **figure 10B,** le module logiciel de partitionnement MP_DO de la **figure 9** subdivise la sous-partie courante $CU_{k'}$ à décoder en une pluralité Z de sous-parties de transformée $TU_1$, $TU_2$, ..., $TU_w$, ..., TUz ($1 \leq w \leq Z$).

Au cours d'une sous-étape D632 optionnelle représentée à la **figure 6B,** le module de décodage UDO de la **figure 9** sélectionne l'ensemble de coefficients quantifiés $TUq_w$ courant associé à la première sous-partie de transformée courante $TU_w$. Une telle sélection est effectuée dans un ordre prédéfini, tel que par exemple l'ordre lexicographique.

Au cours d'une sous-étape D633 représentée à la **figure 6B,** le module de décodage entropique MDE_DO de la **figure 9** procède à un décodage entropique de l'ensemble de coefficients quantifiés $TUq_w$ courant associé à la première sous-partie de transformée courante $TU_w$ à décoder. Dans le mode préféré de réalisation, le décodage effectué est un décodage entropique de type arithmétique ou de Huffman. La sous-étape D633 consiste alors à :

- lire le ou les symboles d'un ensemble prédéterminé de symboles qui sont associés à l'ensemble de coefficients quantifiés $Cuq_1$ courant,
- associer des informations numériques, telles que des bits, au(x) symbole(s) lu(s).

A l'issue de la sous-étape D633 précitée, est obtenue une pluralité d'informations numériques associées à l'ensemble de coefficients quantifiés $TUq_w$ courant.

Au cours d'une sous-étape D634 représentée à la **figure 10B,** le module de déquantification $MQ^{-1}$_DO de la **figure 9** procède à la déquantification des informations numériques obtenues à la suite de la sous-étape D633, selon une opération classique de déquantification qui est l'opération inverse de la quantification mise en oeuvre lors de la sous-étape de quantification C631 de la **figure 6B.** Un ensemble de coefficients déquantifiés $TUDq_w$ courant est alors obtenu à l'issue de la sous-étape D634.

Au cours d'une sous-étape D635 représentée à la **figure 10B,** le module $MT^{-1}$_DO de la **figure 9** procède à une transformation de l'ensemble de coefficients déquantifiés $TUDq_w$ courant, une telle transformation étant une transformation directe inverse, telle que par exemple une transformation en cosinus discrètes inverse de type $DCT^{-1}$. Cette transformation est l'opération inverse de la transformation effectuée à la sous-étape C630 de la **figure 6A.** A l'issue de la sous-étape D635, est obtenue une partie résidu décodée $TUDr_w$.

Au cours d'une sous-étape D636 représentée à la **figure 10B,** le module $PRED^{-1}$_DO de la **figure 9** procède au décodage prédictif de la première sous-partie de transformée courante $TU_w$ à l'aide des paramètres de prédiction optimaux qui ont été lus au cours de la sous-étape D628 précitée.

Ladite sous-étape de décodage prédictif précitée permet de construire une première sous-partie de transformée prédite courante $TUDp_w$ qui est une approximation de la première sous-partie de transformée courante $TU_w$ à décoder.

Au cours d'une sous-étape D637 représentée à la **figure 10B,** le module CAL2_DO de la **figure 9** procède à la reconstruction de la première sous-partie de transformée courante $TU_w$ en ajoutant à la partie résidu décodée $TUDr_w$, obtenue à l'issue de la sous-étape D635, la partie prédite $TUDp_w$ qui a été obtenue à l'issue de la sous-étape D636 précitée.

L'ensemble des sous-étapes D632 à D637 est itéré pour chacune des sous-parties $TU_1$, $TU_2$, ..., $TU_w$, ..., TUz à décoder de la sous-partie $CU_{k'}$ courante à décoder de la première partie $CU_1$ du bloc courant $CTU_u$, dans l'ordre lexicographique prédéterminé.

Dans le cas où la sous-partie transformée courante $TU_w$ a une forme géométrique à m côtés, une sous-étape intermédiaire D6330 est mise en oeuvre entre les sous-étapes D633 et D634 précitées. Au cours de cette sous-étape intermédiaire, les valeurs de pixels décodés qui ont été obtenues à la suite de la sous-étape D633 de décodage entropique de la pluralité d'informations numériques associées à l'ensemble de coefficients quantifiés $TUq_w$ courant sont complétées par des valeurs de pixels prédéterminées, jusqu'à l'obtention d'un bloc de valeurs de pixels carré ou rectangulaire.

La sous-étape D6330 précitée est mise en oeuvre par le module logiciel de calcul CAL1_DO tel que représenté à la **figure 9.**

L'ensemble des sous-étapes D622 à D637 est itéré pour chacune des sous-parties CU$_1$, CU$_2$, ..., CU$_{k'}$, ..., CU$_N$ à décoder de la première partie CU$_1$ courante du bloc courant CTU$_u$, dans l'ordre lexicographique prédéterminé.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

## Revendications

1. Procédé de décodage d'un signal de données (F) représentatif d'au moins une image codée ayant été subdivisée en une pluralité de blocs (CTU$_1$, CTU$_2$, ..., CTU$_i$, ..., CTUs), comprenant les étapes suivantes, pour un bloc courant à décoder, subdivisé en une première partie (CU$_1$) et une deuxième partie (CU$_2$), la première partie étant non subdivisible et ayant une forme rectangulaire ou carrée et la deuxième partie formant le complément de la première partie dans le bloc courant, ladite deuxième partie ayant une forme géométrique à m côtés, avec m>4 :

   - sélectionner (D610), dans le signal de données, des données codées de la première partie,
   - décoder (D611-D615) les données codées de la première partie,
   - reconstruire (D615) la première partie à partir des données décodées de la première partie,
   - reconstruire (D615) la deuxième partie en mettant à zéro des coefficients quantifiés issus d'une quantification d'un résidu de prédiction associé à ladite deuxième partie, lesdits coefficients quantifiés n'étant pas inscrits dans ledit signal de données.

2. Procédé de décodage selon la revendication 1, comprenant en outre un décodage (D611), en association avec les données décodées de la première partie, d'une valeur d'un élément de syntaxe lu dans le signal de données, ladite valeur correspondant à une prédiction Intra ou Inter à appliquer à la première partie.

3. Procédé de décodage selon la revendication 1 ou la revendication 2, dans lequel, au cours de la reconstruction de la deuxième partie à m côtés du bloc courant, au moins une information de reconstruction des pixels de ladite deuxième partie à m côtés est mise à une valeur prédéterminée.

4. Procédé de décodage selon la revendication 3, dans lequel ladite au moins une information de reconstruction des pixels de la deuxième partie à m côtés du bloc courant est représentative de l'absence de subdivision de ladite deuxième partie à m côtés du bloc courant.

5. Procédé de décodage selon la revendication 3, dans lequel ladite au moins une information de reconstruction des pixels de la deuxième partie à m côtés du bloc courant est représentative de l'absence d'informations résiduelles résultant d'une prédiction des pixels de ladite deuxième partie à m côtés du bloc courant.

6. Procédé de décodage selon la revendication 3, dans lequel ladite au moins une information de reconstruction des pixels de la deuxième partie à m côtés du bloc courant est représentative de valeurs de prédiction prédéterminées des pixels de ladite deuxième partie à m côtés du bloc courant.

7. Procédé de décodage selon l'une quelconque des revendications 1 à 6, dans lequel le bloc courant subdivisé contient au plus une partie ayant une forme géométrique à m côtés.

8. Procédé de décodage selon l'une quelconque des revendications 1 à 7, dans lequel la première partie est située dans un des coins du bloc courant et m=6.

9. Dispositif de décodage d'un signal de données (F) représentatif d'au moins une image codée ayant été subdivisée en une pluralité de blocs (CTU$_1$, CTU$_2$, ..., CTU$_i$,..., CTUs), ledit dispositif comprenant, pour un bloc courant à décoder, subdivisé en une première partie (CU$_1$) et une deuxième partie (CU$_2$), la première partie étant non subdivisible et ayant une forme rectangulaire ou carrée et la deuxième partie formant le complément de la première partie dans le bloc courant, ladite deuxième partie ayant une forme géométrique à m côtés, avec m>4 :

   - des moyens de sélection, dans le signal de données, de données codées de la première partie,

- des moyens de décodage des données codées de la première partie,
- des moyens de reconstruction de la première partie à partir des données décodées de la première partie,
- des moyens de reconstruction de la deuxième partie en mettant à zéro des coefficients quantifiés issus d'une quantification d'un résidu de prédiction associé à ladite deuxième partie, lesdits coefficients quantifiés n'étant pas inscrits dans ledit signal de données.

10. Programme d'ordinateur comportant des instructions pour mettre en oeuvre le procédé de décodage selon l'une quelconque des revendications 1 à 8, lorsqu'il est exécuté sur un ordinateur.

11. Support d'informations lisible par un ordinateur, et comportant des instructions d'un programme d'ordinateur selon la revendication 10.

FIG.1

FIG.2A

FIG.2B

$IC_j$

$\downarrow$

SUBDIVISION $IC_j$ / $CTU_1$, $CTU_2$, ..., $CTU_u$,...,$CTU_S$ $1 \leq u \leq S$ ⟶ C1

$\downarrow CTU_u$

SUBDIVISION $CTU_u$ EN UNE PREMIÈRE PARTIE CARRÉE OU RECTANGULAIRE $CU_1$ ET EN UNE DEUXIIÈME PARTIE COMPLÉMENTAIRE $CU_2$ DE FORME GÉOMÉTRIIQUE À m CÔTÉS, AVEC m>4 ⟶ C2

$\downarrow$

MISE EN COMPÉTITION AVEC D'AUTRES MODES DE SUBDIVISION ⟶ C3

$\downarrow SUB_{opt}$

SÉLECTION INDICATEUR **type_decoupe** REPRÉSENTATIF DU MODE DE SUBDIVISION $SUB_{opt}$ POUVANT ÊTRE ASSOCIÉ À AUTRE INDICATEUR **arr_decoupe1** OU **arr_decoupe2** ⟶ C4

$\downarrow$

CODAGE VALEUR INDICATEUR **type_decoupe** ET SI ASSOCIÉE VALEUR AUTRE INDICATEUR **arr_decoupe1** OU **arr_decoupe2** ⟶ C5

type_decoupe

arr_decoupe1
arr_decoupe2

$\downarrow$

CODAGE $CU_1$ ET $CU_2$ ⟶ C6

$\downarrow$

CONSTRUCTION FLUX ⟶ C7

$\downarrow F$

## FIG.3

EP 4 311 240 A2

FIG.4

25

Fig. 5A

Fig. 5B

Fig. 5C    Fig. 5D    Fig. 5G    Fig. 5H

Fig. 5E    Fig. 5F    Fig. 5I    Fig. 5J

FIG.6A

FIG.6B

Fig. 7

F

↓

IDENTIFICATION $CTU_1$, $CTU_2$, …, $CTU_u$,…,$CTU_S$
$1 \leq u \leq S$ —— D1

↓

SELECT. BLOC QUANT. COURANT À DÉCODER —— D2

↓ $CTUq_u$

LECTURE INDICATEUR **type_decoupe** REPRÉSENTATIF DU
MODE DE SUBDIVISION $SUB_{opt}$, POUVANT ÊTRE ASSOCIÉ
À AUTRE INDICATEUR **arr_decoupe1** OU **arr_decoupe2** —— D3

↓

DÉCODAGE VALEUR INDICATEUR **type_decoupe** ET SI
ASSOCIÉE VALEUR AUTRE INDICATEUR **arr_decoupe1** OU
**arr_decoupe2** —— D4

↓

SUBDIVISION $CTU_u$ EN UNE PREMIÈRE PARTIE CARRÉE OU RECTANGULAIRE
$CU_1$ ET EN UNE DEUXIIÈME PARTIE COMPLÉMENTAIRE $CU_2$ DE FORME
GÉOMÉTRIIQUE À m CÔTÉS, AVEC m>4 —— D5

$CTUq_u$ ↓

DÉCODAGE $CU_1$ ET $CU_2$ —— D6

↓ $CTUD_u$

ÉCRITURE BLOC DÉCODÉ COURANT —— D7

↓ $ID_j$

## FIG.8

MEM_DO          TAMP_DO

LT$_a$

LT$_b$
LP
TC

UDO

F          μP          CTUq$_u$          type_decoupe
arr_decoupe1
arr_decoupe2

MP_DO

PG_DO          UT_DO          MI_DO          ML_DO          MDI

MDE_D0    CAL1_DO

MQ$^{-1}$_DO

MT$^{-1}$_DO

PRED$^{-1}$_DO          CAL2_DO

URI

ID$_j$

DO

FIG.9

FIG.10A

## FIG.10B

D620 — SÉLECTION CU$_k$ (k=1 ou k=2)

D621 — k=1?
N
O
D610-D615 FIG.10A

D622 — SÉLECTION ENSEMBLE CUq$_{k'}$ DE COEFFICIENTS QUANTIFIÉS ASSOCIÉS À CU$_{k'}$

CUq$_{k'}$

D623 — DECOD. ENTROP.

I$_{PR}$

D624 — LECTURE INDICATEUR type_decoupe POUVANT ÊTRE ASSOCIÉ À AUTRE INDICATEUR arr_decoupe1 OU arr_decoupe2

1≤k'≤N

D625 — DÉCODAGE VALEUR INDICATEUR type_decoupe ET SI ASSOCIÉE VALEUR AUTRE INDICATEUR arr_decoupe1 OU arr_decoupe2

D626 — SUBDIVISION CU$_{k'}$ EN W SOUS-PARTIES PU$_1$,...,Pu$_z$,...,PU$_W$

D627 — SELECTION SOUS-PARTIE COURANTE PU$_z$

D628 — LECTURE PARAMÈTRES DE PRÉDICTION OPTIMAUX

1≤z≤W

D629 — LECTURE INDICATEUR type_decoupe POUVANT ÊTRE ASSOCIÉ À AUTRE INDICATEUR arr_decoupe1 OU arr_decoupe2

D630

DÉCODAGE VALEUR INDICATEUR type_decoupe ET SI ASSOCIÉE VALEUR AUTRE INDICATEUR arr_decoupe1 OU arr_decoupe2

SUBDIVISION CU$_{k'}$ EN Z SOUS-PARTIES TU$_1$,...,TU$_w$,...,TU$_z$ — D631

D632 — SÉLECTION ENSEMBLE TUq$_w$ DE COEFFICIENTS QUANTIFIÉS ASSOCIÉS À TU$_w$

D633 — DECOD. ENTROP.

1≤w≤Z

D6330 — COMPLEMENT. PARTIE CARRÉE OU RECTANG.

D634 — DEQUANT.

TUDq$_w$

D635 — TRANSFORM. INV.

TUDr$_w$

D636 — PREDICTION INVERSE

TUDp$_w$

D637 — RECONSTRUCTION TU$_w$